# EUROPÄISCHE PATENTSCHRIFT

(11) **EP 0 219 071 B1**
(45) Veröffentlichungstag und Bekanntmachung des Hinweises auf die Patenterteilung: **29.12.1993**
(21) Anmeldenummer: 86114043.2
(22) Anmeldetag: 10.10.1986
(51) Int. Cl.: H02G 15/18, H02G 15/192, H02G 15/013

(54) **Kabelmuffe mit stirnseitigen Dichtungskörpern und einem längsgeschlitzten Muffenrohr**
Cable sleeve with terminal sealing bodies and a longitudinally split sleeve tube
Manchon de câble à corps d'étanchéité terminaux et à manchon tubulaire fendu longitudinalement

(30) Priorität: 14.10.1985 DE 3536599
(43) Veröffentlichungstag der Anmeldung: 22.04.1987
(73) Patentinhaber: SIEMENS AKTIENGESELLSCHAFT, 80333 München (DE)
(72) Erfinder: Pichler, Klaus, Dipl.-Ing. (FH), D-8156 Otterfing (DE); Kunze, Dieter, Dipl.-Ing., D-8027 Neuried (DE); Rost, Jan, D-8131 Traubing (DE); Häder, Wolfgang, D-8031 Eichenau (DE)

(56) Entgegenhaltungen:
- DE-A- 2 119 057
- DE-A- 2 158 992
- FR-A- 1 147 778
- US-A- 4 538 021

## Beschreibung

Die Erfindung betrifft eine Kabelmuffe mit stirnseitigen Dichtungskörpern und einem längsgeschlitzten Muffenrohr, wobei letzteres über Dichtungen auf die Dichtungskörper aufgepreßt und mittels eines längsseitig entlang des Schlitzes verlaufenden Klemmverschlusses dichtend fixiert ist, wobei die Dichtungselemente aus elastischem Werkstoff bestehen, als stirnseitige Ringdichtungen und als Längsdichtung in ihrer Lage vor der Montage fixierbar und in ihrer Flexibilität so ausgestaltet sind, daß der Klemmverschluß bezüglich der Muffenrohrlängsränder und der darauf wirkenden Kraftschlußelemente unter Einhaltung des geforderten Schließdruckes möglichst einfach gestaltet ist, so daß er mit gebräuchlichen Werkzeugen verspannbar ist.

Eine derartige Kabelmuffe wird zum Beispiel in der deutschen Patentschrift 24 27 677 beschrieben. Dort handelt es sich um stirnseitige Dichtungskörper, die mit ihren Kabeleinführungsöffnungen dem einzuführenden Kabel angepaßt werden können. Diese Dichtungskörper werden dann im montierten Zustand an ihren äußeren Umfangsflächen mit Dichtungsmitteln versehen und von einem längsgeteilten Muffenrohr überspannt. Das Muffenrohr besitzt entlang des Längsschlitzes zum Beispiel einen Klemmverschluß, der aus keilförmigen Wülsten besteht, über welche eine angepaßte Klemmschiene aufgezogen wird, wie durch das deutsche Gebrauchsmuster 76 20 440 bekannt ist. Bei derartigen Kabelmuffen sind besonders bei großen Ausführungsformen erhebliche Schließkräfte nötig, die neben Spezialwerkzeugen auch besondere Sorgfalt in den Dichtungssystemen erfordern.

Aus der US-Patentschrift 4.538.021 ist eine Kabelmuffe bekannt, die aus zwei stirnseitigen Dichtungskörpern besteht, auf welche ein aus zwei Halbschalen bestehendes Muffenrohr aufgezogen wird. Auf den Dichtungskörpern sind Ringdichtungen angeordnet, wobei die Flexibilität der Ringdichtungen so ausgestaltet ist, daß durch die längsseitig angebrachten Klemmverschlüsse mit gebräuchlichen Werkzeugen der geforderte Schließdruck aufgebracht werden kann. Dabei handelt es sich hier um ein Muffenrohr aus zwei Halbschalen, so daß eine Montage bezüglich gleichförmiger Dichtungsverhältnisse schwierig ist, wobei erschwerend hinzu kommt, daß die Ringdichtungen von den Längsdichtungen getrennt sind.

Aus dem französischen Patent 1.147.778 ist ein Dichtungssystem für Kabelmuffen aus Halbschalen bekannt, bei dem nun in zwei längsverlaufenden Dichtungssystemen Längsdichtungen jeweils zwischen zwei nach auswärts gerichteten Flanschen der Halbschalen eingepreßt werden. An den Stirnseiten der Kabelmuffe gehen diese Längsdichtungen in die Ringdichtungen über, wobei diese auf die eingeführten Kabel direkt aufgepreßt werden.

Es ergibt sich nun die Aufgabe für vorliegende Erfindung, Kabelmuffen der beschriebenen Art so zu verbessern, daß bei der Montage am Einsatzort keine Sonderwerkzeuge benötigt werden, wobei im allgemeinen und im besonderen bei den Dichtungseinlagen die Montagearbeiten erleichtert und vereinfacht werden sollen.

Die gestellte Aufgabe wird nun mit einer ersten Art von Kabelmuffen dadurch gelöst, daß das Dichtungssystem aus einem Ring besteht, der die Länge der gesamten Dichtungsbereiche der stirnseitigen Dichtungskörper und des Längsschlitzes des Muffenrohres aufweist, wobei er sich endlos in Form von zwei offenen Ringen über den Umfangsflächen der beiden stirnseitigen Dichtungskörper und über zwei dazwischenliegenden hin- und zurückführenden Längsdichtungen im Bereich des einen Längsschlitzes des Muffenrohres erstreckt.

Die gestellte Aufgabe wird weiterhin mit einer zweiten Art von Kabelmuffen wobei die Dichtungselemente am äußeren Umfang der Dichtungskörper von der Längsdichtung des Längsschlitzes des Muffenrohres getrennt sind dadurch gelöst, daß auf die Dichtungselemente einwirkende Druckmittel vorgesehen sind, die separat von den Verschlußelementen nach Fixierung des Muffenrohres (mittels Verschlußelementen) justierbar sind.

Bei den Ausführungsbeispielen gemäß der Erfindung werden Dichtungselemente zwischen den Umfangsflächen der stirnseitigen Dichtungskörper und dem Muffenrohr, wie auch in der Längsdichtung entlang des Längsschlitzes des Muffenrohres aus elastischem Werkstoff verwendet. Dadurch ergeben sich gegenüber bisher klebenden Dichtungseinlagen montagefreundlichere Verhältnisse, wobei der Vorteil besonders auch darin zu sehen ist, daß diese Dichtungselemente wieder verwendbar sind. Dies bedeutet, daß die Kabelmuffe nach einer erforderlichen Öffnung ohne zusätzliche Mittel wieder erfindungsgemäß geschlossen werden kann. Außerdem sind nun die Verschlußsysteme entlang des Schlitzes am Muffenrohr so auf die Dichtungselemente bezüglich der Formgebung, der Elastizität und der Fixierung abgestimmt, daß keine besonderen Werkzeuge verwendet werden müssen. Das Öffnen wie auch das anschließende Wiederverschließen der Kabelmuffe erfordert dadurch auch keine besonderen Maßnahmen, so daß diese Vorgänge völlig problemlos auszuführen sind. Die verwendeten Verschlußelemente im Zusammenhang mit den erfindungsgemäßen Dichtungselementen erfordern z.B. nur einen herkömmlichen Schraubendreher, der in jedem handelsüblichen Werkzeugsatz zu finden ist. Die Dichtungselemente selbst sind in montagefreundlicher Weise in den einzelnen Kabelmuffenelementen bereits so fixiert, daß hier keine besonderen Fertigkeiten oder handwerkliche Maßnahmen getroffen werden müssen. Allen genannten Variationen der Ausführungsbeispiele liegt dabei die gestellte Aufgabe zugrunde, die durch die erfindungsgemäßen Prinzipien gelöst wird.

Die Erfindung wird nun anhand von 49 Figuren näher erläutert.
- Figur 1: zeigt ein Ausführungsbeispiel mit einem endlos eingelegten Dichtungssystem.
- Figur 2: zeigt ein Ausführungsbeispiel mit getrennten Dichtungssystemen in den Bereichen der Dichtungskörper und des Längsverschlusses.
- Figur 3: zeigt ein Ausführungsbeispiel mit endlos eingelegtem Dichtungssystem im Muffenrohr.
- Figur 4: zeigt ein Dichtungssystem in endloser Ausführung.
- Figur 5 und 6: zeigen Dichtungsprofile.
- Figur 7 und 8: zeigen mit Innendruck beaufschlagte Dichtungssysteme.
- Figur 9: zeigt ein schlauchförmiges Dichtungssystem mit spezieller Federcharakteristik.
- Figur 10: zeigt ein Diagramm zur Charakteristik des Dichtungssystems aus Figur 9.
- Figur 11: zeigt ein Ausführungsbeispiel für die Erzeugung von Druck im Dichtungssystem.
- Figur 12 und 13: zeigen einen Längsverschluß, bei dem die Abdichtung auf der Verbindungsschiene erfolgt.
- Figuren 14, 15 und 16: zeigen Besonderheiten in Umlenkpunkten des Dichtungssystems.
- Figur 17: zeigt eine geteilte Runddichtung.
- Figur 18 und 19: zeigen ein Ausführungsbeispiel mit getrennten Dichtungssystemen.
- Figur 20 und 21: zeigen einen Schnallenverschluß am Längsschlitz des Muffenrohres.
- Figuren 22, 23 und 24: zeigen einen Spannverschluß, der aus Schnallen und einem Spanndraht besteht.
- Figur 25 und 26: zeigen eine Verschlußschiene mit exzentrischen Verspannungen.
- Figur 27 und 28: zeigen einen Längsverschluß aus wechselseitig verzahnten Flanschteilen mit einem exzentrischen Verschlußstab.
- Figuren 29, 30 und 31: zeigen einen keilförmigen Verschluß mit Vorrichtungen zum Aufheben der Verschlußschienen.
- Figur 32 bis Figur 37: zeigen Einzelheiten bei getrennten Dichtungssystemen in den Kreuzungsbereichen.
- Figur 38, 39 und 40: zeigen Ausführungsbeispiele, bei denen die Dichtungssysteme im Muffenrohr fixiert sind.
- Figur 41 bis Figur 46: zeigen Ausführungsbeispiele von schlauchförmigen Dichtungssystemen mit Innendruckbeaufschlagung.
- Figur 47: zeigt die Möglichkeit zur Herstellung einer Rundnut am Muffenrohr.
- Figur 48: zeigt ein Einzelteil zur Herstellung einer Nut nach Figur 47.
- Figur 49: zeigt die Möglichkeit zur Fixierung einer Dichtung im Muffenrohr.

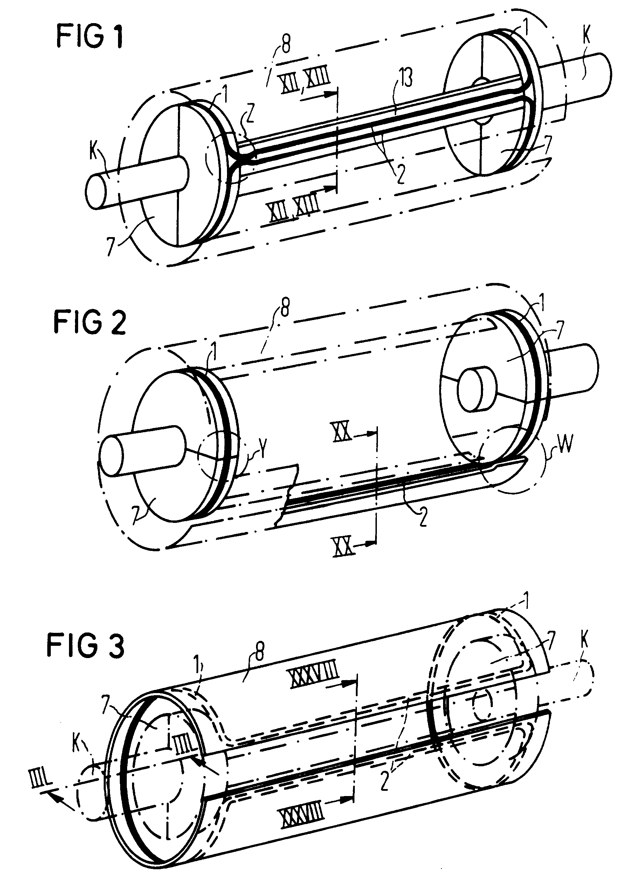

Figur 1 zeigt ein erstes Ausführungsbeispiel gemäß der Erfindung, bei dem die Kabelmuffe mit einem endlosen Dichtungselement 1 - 2 in Form eines großen Ringes, der die Länge über die gesamten Dichtungsbereiche aufweist, ausgestattet ist. Dieses endlose Dichtungselement 1 - 2 wird über den Umfangsflächen der beiden stirnseitigen Dichtungskörper 7 jeweils als Ringdichtung 1 aufgelegt und fixiert und schließlich entlang einer innen liegenden Verbindungsschiene 13 als Längsdichtung 2 gegen das geschlitzte Muffenrohr 8 hin- und zurückgeführt, so daß in diesem Bereich gewissermaßen eine Doppeldichtung besteht. Da die Verbindungsschiene 13 aus dichtem Material besteht, kann auf ihr die Abdichtung zum Innenraum durch Aufpressen des Muffenrohres 8 erfolgen. Diese Verbindungsschiene 13 ist ursprünglich für die stirnseitige Verbindung der beiden Dichtungskörper 7 vorgesehen, und wird nun gleichzeitig als Stütze für die Längsdichtung 2 ausgenutzt, wobei hierfür verschiedene, später noch zu erläuternde Varianten infrage kommen. Die stirnseitigen, geteilten Dichtungskörper 7 können wie bisher ebenfalls mit ihren Kabeleinführungsöffnungen den einzuführenden Kabeln K angepaßt werden. Die angedeuteten Schnitte und Einzelheiten werden in später folgenden Figuren erläutert.

Figur 2 zeigt ein zweites Ausführungsbeispiel für eine Kabelmuffe gemäß der Erfindung, bei der die Dichtungselemente geteilt und in ihren zugeordneten Einzelteilen fixiert sind. So sind die Ringdichtungen 1 auf den Umfangsflächen der geteilten Dichtungskörper 7 und die Längsdichtung 2 auf einem der beiden Längsränder des Muffenrohres 8 fixiert, so daß sie als zusammengehörige Einzelteile bereits geliefert werden können. Montagearbeiten entfallen somit. Da, wie bereits erwähnt wurde, die Dichtungselemente 1 und 2 aus elastischem Werkstoff bestehen, kann der Muffenkörper nahezu immer wieder mit denselben Elementen geöffnet und geschlossen werden. Auch hier werden die angedeuteten Schnitte und Einzelheiten in späteren Figuren näher erläutert.

Figur 3 zeigt ein drittes Ausführungsbeispiel einer Kabelmuffe gemäß der Erfindung, bei der die Dichtungselemente 1 und 2 als Endlosdichtung im Muffenrohr 8 werksseitig eingelagert und fixiert ist, wobei auch hier die Klemmung des Muffenrohres 8 im längsseitigen Verschlußbereich mit Hilfe von einfachen Verschlußelementen erfolgen kann. Die innen liegende Verbindungsschiene für die stirnseitigen Dichtungskörper 7 kann bei Bedarf wieder als Stütze für die längsseitigen Dichtungselemente 2 dienen. Die näheren Einzelheiten werden ebenfalls in folgenden Figuren näher erläutert.

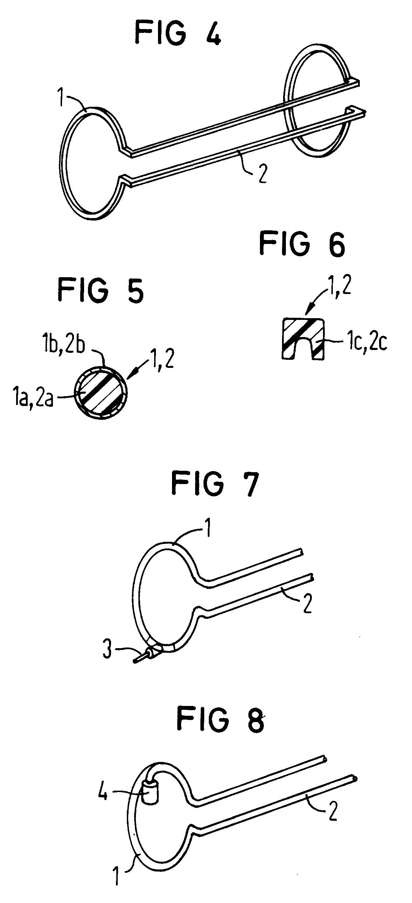

In Figur 4 wird ein endloses Dichtungselement 1-2 gezeigt, das aus zwei Ringdichtungen 1 an den Enden und aus zwei parallel verlaufenden Längsdichtungen 2 besteht. Diese Formgebung läßt sich in besonders einfacher Weise in die Dichtungsnuten der bereits montierten stirnseitigen Dichtungskörper der Kabelmuffe einlegen, wobei sich gleichzeitig die Lage der Längsdichtungen ergibt, so daß sie in dem vorgesehenen Dichtungsbereich zum Beispiel der Ausführungsbeispiele nach Figur 1 bzw. 3 eingelegt werden. Die Einlegearbeit ist einfach und Schnitte sind nicht erforderlich.

Die Figur 5 deutet nun einen kreisförmigen Querschnitt für die vorgesehenen Dichtungselemente 1-2 an, wobei hier beispielsweise eine zusätzliche Beschichtung 1b bzw. 2b aus einem geeigneten Material für Permeationsschutz (zum Beispiel eine Elastomer-Ummantelung) auf das elastische Grundmaterial 1a bzw. 2a (zum Beispiel Silicon-Kautschuk) des Dichtungselementes 1-2 aufgebracht ist. Diese Querschnittsform soll stellvertretend für andere Querschnitte stehen; denn die Grundform ist beinahe beliebig variierbar, doch muß sie jeweils dem Profil des Dichtungsbereiches entsprechen. So sind rechteckige Querschnitte mit oder ohne gewölbten Flächen ebenfalls denkbar wie Doppelprofile oder ähnliches. Wesentlich ist jedoch das Grundmaterial für derartige Dichtungselemente und dies besteht im vorliegenden Fall für die Ausführungsbeispiele gemäß der Erfindung vorzugsweise aus einem Elastomer. Dies gilt für alle noch folgenden Dichtungselemente.

Die Figur 6 erläutert ebenfalls stellvertretend ein Dichtungselement 1-2 mit zwei hintereinander liegenden Dichtungslippen 1c bzw. 2c, durch die das Dichtungselement "weicher" und anpassungsfähiger gemacht werden kann.

Ebenso sind auch schlauchförmige Dichtungselemente 1-2 einsetzbar, die durch ihre Anpassungsfähigkeit besonders bevorzugt eingesetzt werden können, zumal dann, wenn man den Innenraum der schlauchförmigen Dichtungselemente 1-2 mit Innendruck beaufschlagt. Hierdurch läßt sich der für die Dichtung erforderliche Schließdruck sehr genau und einfach einstellen, wobei sich die Schließelemente des Verschlußsystems entsprechend einfacher gestalten lassen, da der geforderte Schließdruck nicht bereits beim Schließvorgang aufgebracht werden muß. So zeigt die Figur 7 als Ausführungsbeispiel ein schlauchförmiges Dichtungselement 1-2, das mit einem Ventil 3 versehen ist, über welches der gewünschte Innendruck im Innenraum des schlauchförmigen Dichtungselementes 1-2 hergestellt werden kann. Es handelt sich also hier um ein endloses Schlauchsystem, in welchem als Druckmedium nach dem Schließen des Muffenrohres ein Gas oder eine Flüssigkeit eingebracht wird. Die Schlauchinnenwandung ist durch eine Spezialbeschichtung gegen Permeation geschützt. Das Druckmedium kann aus einer Handpumpe oder Vorratspatrone in den Schlauch eingepumpt werden. Die Vorratspatrone kann dabei angeflanscht bleiben und für die Nachspeisung bei Druckverlust verwendet werden.

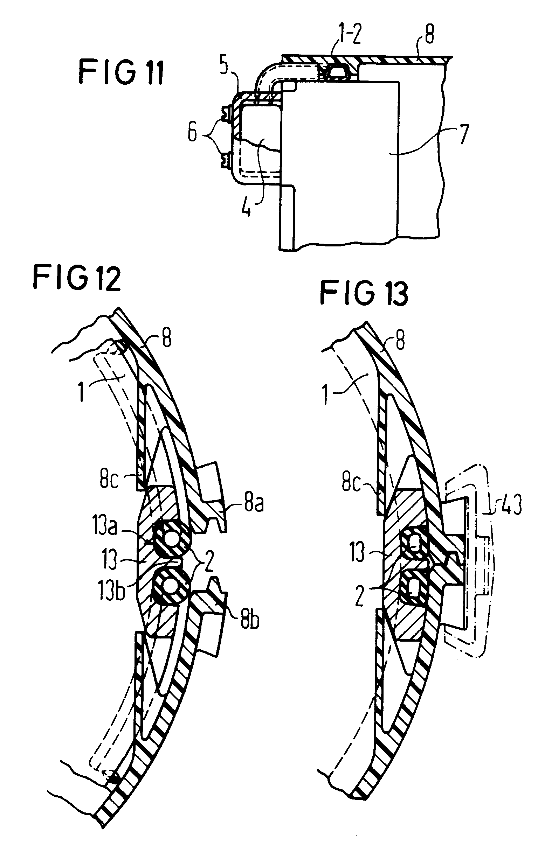

Während die Druckregelung bei dem Ausführungsbeispiel nach Figur 7 durch entsprechende Druckmediumzufuhr erreicht wird, ist bei dem Ausführungsbeispiel nach Figur 8 keine Druckmediumzufuhr nötig, da die Druckerhöhung durch Komprimierung eines Behälters 4 erfolgt, der an das geschlossene Drucksystem des Dichtungselementes 1-2 fest angeschlossen ist. Der Schlauch ist in diesem Falle mit dem Druckmedium Gas oder Flüssigkeit drucklos gefüllt. Nach dem Schließen des Muffenrohres wird dann durch Zusammenpressen des Behälters 4 der erforderliche Druck eingestellt, wie in Figur 11 später erläutert wird.

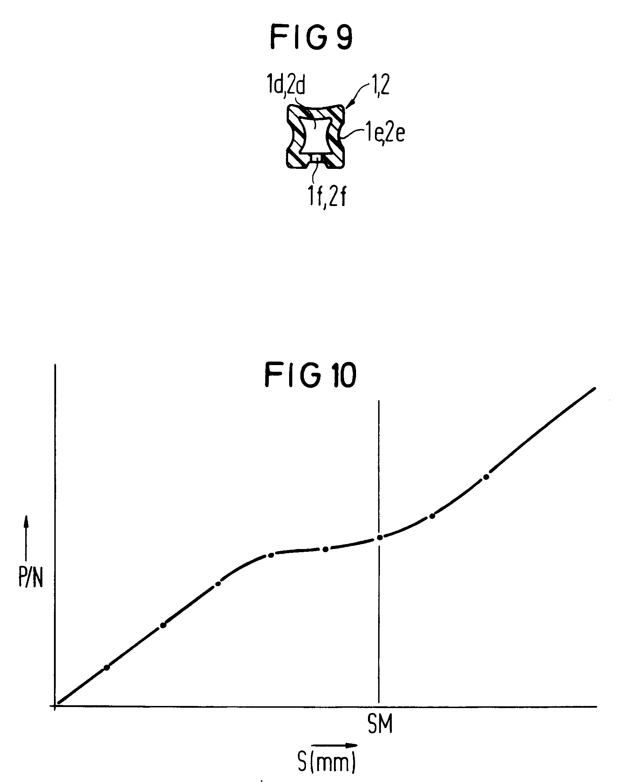

In Figur 9 wird ein besonders günstiges Profil für ein Dichtungselement 1-2 gemäß der Erfindung dargestellt. Es handelt sich hier um einen Schlauch, der in seiner Grundform etwa rechteckigen Querschnitt aufweist. Abweichend von der strengen Rechteckform sind die seitlichen Wandungen 1e bzw. 2e einwärts gedellt, so daß sich beim Zusammenpressen des Schlauches in vertikaler Richtung eine bevorzugte Einknickrichtung in den Innenraum 1d bzw. 2d ergibt, wenn die Pressung einen duch Form und Material bestimmten Grenzwert überschreitet. Zunächst wird das Dichtungselement 1-2 bei vertikaler Druckbeaufschlagung aufgrund seiner elastischen Materialeigenschaften zusammengepreßt und bei Erreichen des genannten Grenzwertes knickt der Schlauch nach einwärts bis er schließlich völlig zusammengedrückt ist. Anschließend ist für die Pressung wiederum nur die Elastizität des Materials bestimmend. Diese Ausbildung ist für Dichtungselemente in Dichtungsbereichen für Kabelmuffen besonders günstig, da das Profil im Zusammenhang mit den elastischen Eigenschaften des Materials so abgestimmt werden kann, daß der Druckanstieg im Dichtungssystem zunächst linear erfolgt bis zum erforderlichen Schließdruck. Im anschließenden Bereich bleibt dann auch bei zunehmendem Schließhub, der sich zum Beispiel bei weiterem Verschrauben der Verschlußelemente ergibt, der Druck im Dichtungssystem annähernd gleich. Das bedeutet, daß die Verschlußelemente nur für diesen erforderlichen Schließdruck ausgelegt werden müssen. Eine Überschreitung des zulässigen Wertes für die Verschlußelemente ist also in weitem Bereich nicht möglich, so daß sie vor Überlastung und damit vor Schädigung in ausreichendem Maße geschützt sind. Außerdem kann bei diesem Dichtungsprofil in der zum Innenraum der Kabelmuffe weisenden Wandung eine Nut eingelassen sein, in die Öffnungen 1f bzw. 2f zum Innenraum 1d zw. 2d des Dichtungselementes 1-2 eingebracht sind. Hierüber kann nun beispielsweise der in der Kabelmuffe eventuell vorhandene Überdruck auf das Dichtungssystem ausgenützt werden, so daß zusätzlich auch im Dichtungssystem ein Überdruck herrscht, der im bereits beschriebenen Sinne unterstützend im Dichtungssystem wirkt.

Eine solche elastische Charakteristik ist nun in Figur 10 dargestellt. Die Kurve zeigt die Abhängigkeit des Schließdruckes P vom Schließhub S des Dichtungselementes 1-2 nach Figur 9. Man erkennt hier zunächst im ersten Bereich die linear ansteigende Charakteristik, indem sich der zunehmende Schließhub S fast ausschließlich aus den elastischen Eigenschaften des verwendeten Materials des Dichtungselementes ergibt. Nach dem ersten Knick der Kurve beginnt dann das Einknicken der seitlich eingedellten Wandungen 1e bzw. 2e des Dichtungselementes 1-2 nach Figur 9. Hier bleibt der Schließdruck annähernd gleich und die Höhe dieses Bereiches ist so eingestellt, daß sie gerade dem erforderlichen Schließdruck entspricht. Bei Erhöhung des Schließhubes S, der sich bei weiterem Verklemmen der Verschlußelemente ergibt, steigt der Schließdruck in weitem Bereich nicht an. Damit läßt sich also der Toleranzbereich so erweitern, daß eine Gefahr zur Überbeanspruchung der Verschlußelemente praktisch nicht besteht, soweit der Schließhub S nicht über den zweiten nachfolgenden Knick SM der Kurve hinaus überhöht wird. Dies läßt sich jedoch durch geeignete Maßnahmen und Begrenzungen verhindern. Nach diesem zweiten Knick SM findet, wenn keine Begrenzung erfolgt, wieder die normale Kompression statt, die lediglich vom verwendeten Material des Dichtungselementes 1-2 bestimmt ist.

Die Figur 11 zeigt in schematischer Darstellung die Anordnung des Behälters 4 zur Erhöhung des Innendrucks in einem schlauchförmigen Dichtungselement, wie es bereits in Figur 8 angedeutet wurde. Der Behälter 4 wird nach dem Schließen des Muffenrohres 8 mit einer Kappe 5 durch die Befestigungsschrauben 6 an die Stirnfläche des Dichtungskörpers 7 gedrückt. Dabei wird der innere Druck im Schlauchsystem des Dichtungselementes 1-2 erhöht, wobei dieses gleichmäßig an die Dichtungsflächen angepreßt wird. Die Kappe 5 ist so dimensioniert, daß bei ihrer festen Anlage an der entsprechend ausgeformten Stirnseite des Dichtungskörpers 7 eine ausreichende Dichtwirkung erzielt wird. In entgegengesetzter Weise kann durch Lösen der Kappe 5 mit den Befestigungsschrauben 6 der Behälter 4 wieder entspannt, die Dichtung dekomprimiert und die Kabelmuffe anschließend ohne größeren Kraftaufwand geöffnet werden. Die Vorteile dieses indirekt durch Innendruck im Dichtungselement wirkenden Dichtungssystems hat besondere Vorteile, da eine gleichmäßige Druckverteilung, leichtes Öffnen und Schließen des Muffenrohres bei drucklosem Schlauch und die einfache Möglichkeit, den Anpreßdruck der Dichtung zu variieren und damit Fertigungstoleranzen auszugleichen, gegeben ist.

Die folgenden Figuren 12 bis 16 zeigen nun Schnitte und Einzelheiten zur Verdeutlichung des Auführungsbeispiels nach Figur 1. So zeigt die Figur 12 einen Aufbau der Längsdichtung 2 am Muffenrohr 8 vor und die Figur 13 nach dem Schließvorgang, so daß die Wirkungsweise des einfachen Klemmverschlusses erkennbar wird. Es handelt sich dabei um ein Dichtungssystem mit einem endlosen, schlauchförmigen Dichtungselement 1-2, wobei hier nur die Längsdichtung 2 sichtbar ist, die entsprechend der endlosen Ausführung doppelt geführt und in zwei hierfür vorgesehenen Nuten 13a der Verbindungsschiene 13 für die stirnseitigen Dichtunskörper 7 eingelegt sind. Zweckmäßigerweise sind sie dort fixiert, so daß die Montage erleichtert wird. Die Ringdichtungselemente 1 sind in dieser Schnittdarstellung lediglich angedeutet. Das Muffenrohr 8 besitzt nun entlang des Längsschlitzes zwei wulstartige Ausformungen 8a und 8b, die in diesem speziellen Fall keilförmig ausgebildet sind und zum Verschließen mit Hilfe einer oder mehrerer Klemmschienen zusammengezogen werden. Für die gegenseitige Führung beim Zusammenpressen ist eine Nut-Feder-Ausbildung in den beiden Ausformungen 8a und 8b vorgesehen. Im Inneren des Muffenrohres 8 sind außerdem entlang des Dichtungsbereiches Führungen 8c angeordnet, die sich beim Verschließen des Muffenrohres 8 hinter die Verbindungsschiene 13 schieben und auf diese Weise eine exakte Führung ergeben. Das Profil der Dichtungselemente 1-2 ist hier kreisförmig; dies ist jedoch nicht zwingend. Der Durchmesser dieser Dichtungselemente 1-2 ist so gewählt, daß das Dichtungselement 1-2 über die Nut 13a der Verbindungsschiene 13 hinausragt. Die Nut 13a ist jedoch so ausgebildet, daß sie genügend Ausweichraum für die später zusammengepreßte Dichtung unter Einhaltung des erforderlichen Dichtungsdruckes aufweist. Das Dichtungselement 1-2 kann drucklos oder auch mit Innendruck beaufschlagt sein.

Die Figur 13 erläutert nun den Endzustand des geschilderten Verschlußvorganges, der mit Hilfe einer angepaßten keilförmigen Verschlußschiene 43 erfolgte. Das Muffenrohr 8 ist dadurch im Verschlußbereich zusammengezogen, wobei die Längsränder des Muffenrohres 8 die Dichtungselemente 2 in die Nuten 13a der Verschlußschiene eingepreßt haben. Außerdem ist die Fixierung mit der Verschlußschiene 13a durch die Führungen 8c im Inneren des Muffenraumes deutlich.

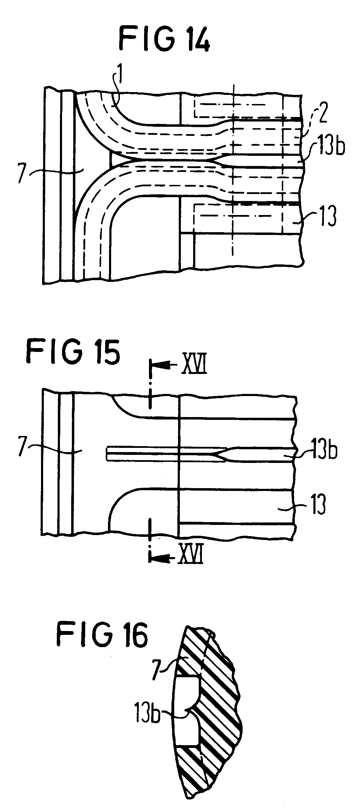

Bei derartigen endlosen Dichtungselementen 1-2 sind die Umlenkungen in den Übergangszonen Z (Figur 1) zwischen der Längsdichtung 2 und den Ringdichtungen 1 besonders schwierig, weshalb hier besondere Ausformungen nötig sind, wie sie in den Figuren 14 bis 16 dargestellt sind.

Die Figur 14 verdeutlicht einen solchen Umlenkpunkt Z mit eingelegtem, schlauchförmigem Dichtungselement 1-2. In dem Bereich der Längsdichtung 2 ist die Verbindungsschiene 13 mit einem Steg 13b versehen, der zwischen den beiden Längsdichtungen 2 liegt und dort den Zwickelbereich ausfüllt. Dieser Steg 13b verjüngt sich am Ende und ist auch auf dem Dichtungskörper 7 noch weitergeführt, bis sichergestellt ist, daß der Zwickelbereich in Längsrichtung völlig abgedichtet ist. Die Ringdichtung 1 wird dann in entsprechenden Ausformungen am Umfang des Dichtungskörpers 7 weitergeführt.

Die Figur 15 zeigt diesen Umlenkbereich Z ohne Dichtungselemente 1-2, so daß die entsprechende Verjüngung des Steges 13b am Ende sichtbar wird. Die Abdichtung der Trennlinie zwischen der Verbindungsschiene 13 und dem Dichtungskörper 7 erfolgt zum Beispiel durch eine Zwischeneinlage aus dichtendem Werkstoff.

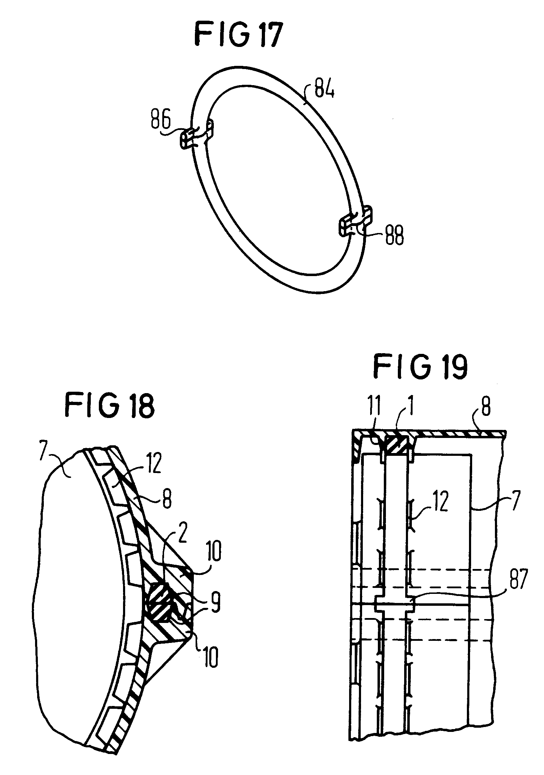

Die Ausformung des Steges 13b geht nun letztlich noch aus der Querschnittsdarstellung der Figur 16 hervor, die in Figur 15 angedeutet ist. Dieses Profil für die Ausformung des Steges 13b ist jeweils dem verwendeten Dichtungselementenprofil anzupassen. Bei diesem Ausführungsbeispiel ist gemäß des kreisförmigen Querschnittes des Dichtungselementes 1-2 auch die seitliche Ausformung des Steges 13b bis zur Verjüngung kreisförmig zu halten.

Die Figur 17 zeigt eine geteilte Ringdichtung 84, die in den Übersichtsfiguren in allgemeiner Weise mit 1 bezeichnet sind. Diese geteilte Runddichtung 84 besteht in diesem Fall aus zwei Teilen, die in der Länge und Ausdehnung den Gegebenheiten in den Umfangsflächen der Dichtungskörperteile angepaßt sind. Um eine einfache und sichere Führung dieser Runddichtungen 84 zu gewähren, besitzen sie an den Teilungen 88 für geteilte Dichtungskörper T-förmig gestaltete Enden 86. Die gesamte Runddichtung 84 besteht also den Teilungen y (Figur 2) der Dichtungskörper entsprechend aus mehreren Teilen, die in die umlaufenden Nuten der Dichtungskörperteile 7 (Figuren 1 bis 3) eingelegt werden. Die T-förmig gestalteten Enden 86 der Runddichtungsteile 84 dienen dabei zur Verankerung im Dichtungskörperteil. Sie werden von entsprechenden Quernuten 87 an den Trennebenen des Dichtungskörpers (Figur 19) aufgenommen. Jedes Teil der Runddichtung 84 sitzt mit Vorspannung in der Dichtungskörper-Umfangsnut und kann durch die Verankerung in der Quernut 87 nicht herausgleiten. Die T-förmigen Enden 86 der Runddichtungsteile 84 sind so gestaltet, daß der runde Rücken der Runddichtungen 84 bis zu den Teilungen 88 fortgesetzt ist und daß beim Zusammenschrauben der Dichtungskörperteile die T-förmigen Enden 86 gegeneinander gepreßt werden. Nach dem Spannen des Muffenrohres 8 um die Dichtungskörper 7 wird die Runddichtung 84 in die umlaufende Nut des Dichtungskörpers 7 und gegen die Innenwandung des Muffenrohres 8 gedrückt, wobei damit die gewünschte Dichtwirkung erzielt wird.

Die Figuren 18 und 19 zeigen Ausschnitte am Muffenrohr 8 im Dichtungsbereich des Überganges von Längs-und Runddichtung, wobei die Figur 18 einen Querschnitt und die Figur 19 einen Längsschnitt darstellen. Die beiden geraden Teile 2 des Dichtungssystems sind in den Längsnuten 9 der Flanschleisten 10 des Muffenrohres 8 untergebracht. Die Form der Dichtunsnuten 9 und 11 des Muffenrohres 8 sind den entsprechenden, bereits beschriebenen Dichtungsformen angepaßt. Die beiden Runddichtungen 1 des Dichtungssystems werden von den an den beiden Stirnseiten des Muffenrohres 8 befindlichen Rundnuten 11 aufgenommen. Diese Rundnuten 11 des Muffenrohres sind als Segmente 12 am inneren Umfang des Muffenrohres 8 angeordnet, um die zum Schließen erforderliche Elastizität nicht zu beeinträchtigen. Bei einer endlosen Dichtung werden also die beiden Längsdichtungen 2 die Längsnuten 9 der Flanschleisten 10 des Muffenrohres 8 eingelegt, wo sie gegeneinander gepreßt werden. Nach Montage und Schließen des Muffenrohres 8 ist der Innenraum der Muffe druckdicht nach außen abgeschlossen. Dichtungssystem und Dichtungsnut sind so aufeinander abgestimmt, daß die Dichtungen nach dem Eindrücken in die Nut darin verbleiben und nicht mehr herausgleiten. Somit können das Muffenrohr 8 und die benötigten Dichtungen 1-2 als Einheit geliefert und am Einsatzort montiert werden. Die Figur 19 zeigt die beiden Quernuten 87, die in der Teilungsebene des Dichtungskörpers 7 als Erweiterung der Dichtungsnut 11 ausgebildet sind und zur Verankerung der geteilten Runddichtung 84 dienen.

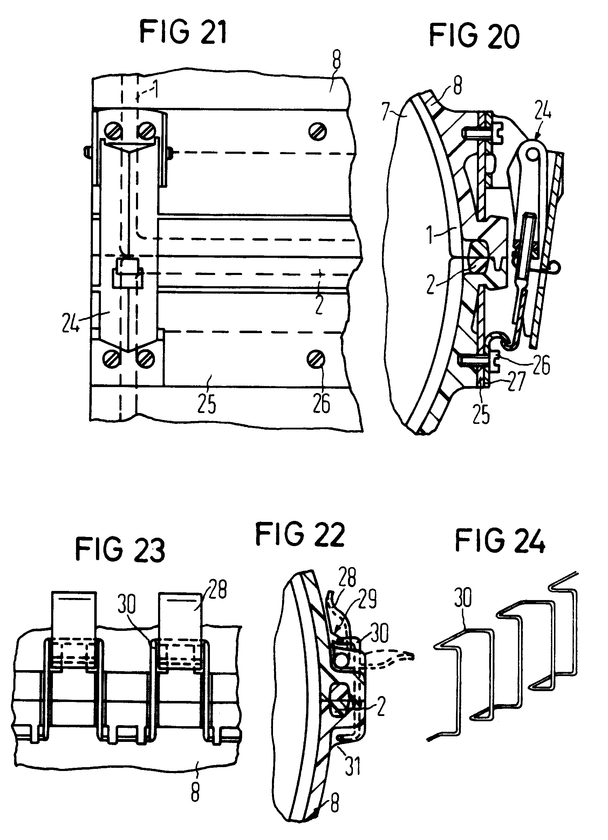

Die Figuren 20 und 21 zeigen einen Spannverschluß, der entlang des Längsschlitzes des Muffenrohres 8 angeordnet ist und aus mehreren Einzelschnallen 24 besteht. Dabei ist im Querschnitt der Figur 20 die eingelegte Längsdichtung 2 zu erkennen, die in der Längsnut des Muffenrohrflansches angeordnet ist und zum Beispiel wiederum aus einem doppelt geführten Dichtungsprofil besteht. Die verwendeten Einzelschnallen 24 mit einer selbstrastenden Sicherung sind handelsüblich und sind auf die Verhältnisse entlang des Längsschlitzes zugeschnitten. So sind in jedem Fall im Bereich der stirnseitigen Dichtungskörper 7 solche Einzelschnallen 24 angeordnet, um eine Direktauswirkung der Spannkräfte auf die darunter liegende Runddichtung 1 zwischen dem Muffenrohr 8 und dem Dichtungskörper 7 zu erreichen. Die Spannkräfte auf die Längsdichtung 2 werden zum Beispiel über zwei Stegbleche 25 übertragen, die mit den Befestigungsschrauben 26 an das Muffenrohr 8 geschraubt sind, wie auch die Figur 21 zeigt. Die Figur 21 zeigt weiterhin in gestrichelter Skizzierung den Verlauf der eingelegten Dichtungselemente 1-2 wie bereits vorher schon beschrieben ist.

Die Figuren 22 bis 24 erläutern eine weitere Variante für einen einfachen Verschluß, der keine Sonderwerkzeuge benötigt. Es handelt sich auch hier um einzelne Schließschnallen 28, die reihenförmig nebeneinander liegend entlang des Längsschlitzes am Muffenrohr 8 gelagert sind. Diese Schließschnallen 28 besitzen einen oder mehrere Einhängeschlitze 29, in welche jeweils der Spanndraht 30 zum Verspannen des Verschlusses eingehakt wird. Der Spanndraht 30 ist, wie Figur 24 zeigt, entsprechend der Anzahl der Schließschnallen 28 mäanderförmig gebogen, wobei jeweils die Kröpfungen der einen Seite in Einhängeschlitzen 31 des Muffenrohres 8 und die Kröpfungen der zweiten Seite in den Einhängeschlitzen 29 der Schließschnallen 28 eingehängt werden. Durch Niederdrücken der Schließschnallen 28 wird der Spanndraht 30 verspannt und bewirkt den erforderlichen Schließdruck in den Dichtungssystemen im Längsverschluß des Muffenrohres 8 und in den Runddichtungssystemen, da hierdurch gleichzeitig das Muffenrohr 8 auf die Dichtunskörper 7 verspannt wird. Die Figur 23 erläutert in einer Draufsicht die Anordnung der niedergedrückten Schließschnallen 28 und den dadurch festgespannten Spanndraht 30.

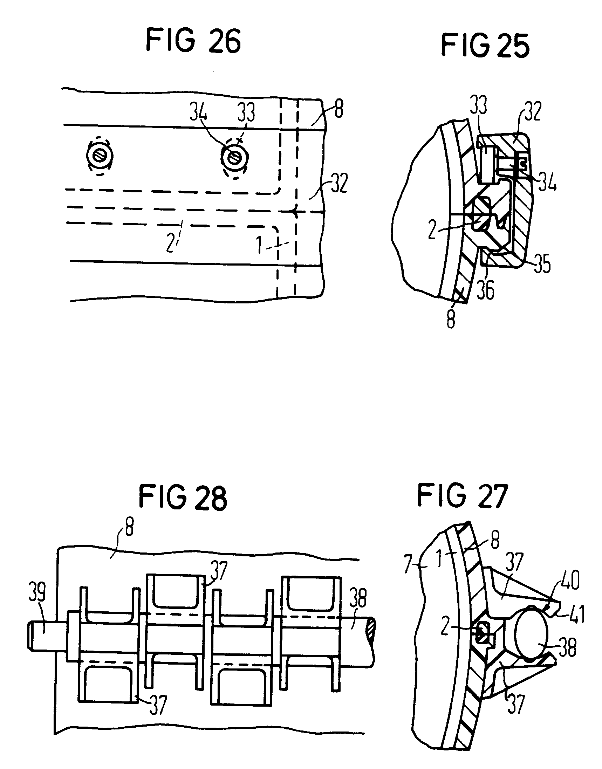

Die Figuren 25 und 26 verdeutlichen einen Längsverschluß für das Muffenrohr 8, der aus einer Verschlußschiene 32 mit parallelverlaufenden Schenkeln und aus einem geteilten Längswulst am Muffenrohr 8 gebildet wird. Der Längswulst des Muffenrohres 8 besitzt an den äußeren Flächen jeweils längsverlaufende Hinterschneidungen, in welchen der Eingriff der einwärts gebogenen Schenkel der Verschlußschiene 32 erfolgt. Die Verspannung des Verschlusses, das heißt der Verschlußschiene 32 mit dem Längswulst erfolgt durch mehrere exzentrische Kurvenscheiben 33, die in kurzen Abständen in der Verschlußschiene 32 gelagert sind. Die Kurvenscheiben 33 sind so gelagert, daß sie in die Hinterschneidung des einen Längswulstes eingreifen können, wenn sie von außen zum Verspannen der Verschlußschiene 32 dort eingedreht werden. Durch diese exzentrische Ausbildung dieser Kurvenscheiben 33 läßt sich der Schließdruck entlang des Längsschlitzes kontinuierlich und mit einfachen Werkzeugen, zum Beispiel einem Schraubendreher bei schlitzförmiger Ausbildung der Drehachsen 34 für die Kurvenscheiben 33, herstellen. Die Figur 25 zeigt dies in einer Querschnittsdarstellung, wobei hier die Längsdichtung 2 in der Längsnut des Muffenrohres 8 und eine Eingriffshilfe in Form einer Nut-Feder-Ausbildung des Längswulstes erkennbar sind. Die Figur 26 verdeutlicht die Ausbildung und Einwirkung der Kurvenscheiben 33 in einer Draufsicht des Verschlußbereiches des Muffenrohres 8. Durch ovale Ausbildung dieser Kurvenscheiben 33 läßt sich bei Drehung ein doppelter Hub erzeugen. Die Enden der Achsen 34 sind für diesen Zweck als Schlitz, Flach-, Vier- oder Sechskant ausgebildet. Zur Erleichterung der Montage bzw. Demontage der Verschlußschiene 32 sind Einführungsschrägen 35 und 36 vorgesehen. Auch hier ist in gestrichelter Form der Verlauf der Dichtungselemente 1-2 angedeutet (Figur 26).

Die Figuren 27 und 28 zeigen im Querschnitt und in einer Teilansicht eine wechselnd überlappende Ausführung der beiden Längsflansche 37 des Muffenrohres 8. Die sich überlappenden Längsflansche 37 sind nun in ihrem abstehenden Bereich so ausgebildet, daß sich eine in Längsrichtung durchgehende Nut ergibt, wobei die Schenkel dieser Nut hinterschnitten sind und somit eine bogenförmig hinterschnittene Rastnut 40 bilden. In diese Rastnut 40 kann nun ein Stab 38 über die ganze Länge hinweg eingerastet werden. Dieser Stab 38 muß jedoch einen solchen Durchmesser besitzen, daß die Längsflansche 37 so weit auseinandergedrückt werden können, bis die Längsränder des Muffenrohres 8 mit dem eingelegten Dichtungssystem 2 dichtend zusammengepreßt sind. Einführungsschrägen 41 an den Innenkanten der Längsflansche 37 erleichtern das Eindrücken des Verschlußstabes 38. Eine Verbesserung, wie sie hier in den Figuren 27 und 28 gezeigt ist, ergibt die Ausbildung des Verschlußstabes 38 mit ovalem Querschnitt. So kann dieser Verschlußstab 38 zunächst mit seiner Schmalachse leichter in die Rastnut 40 eingeführt werden und zweitens kann durch Verdrehung des Verschlußstabes 38 in Richtung der zweiten großen Achse der Schließdruck auf das Dichtungssystem entsprechend eingestellt werden. Die Figur 28 zeigt in einer Draufsicht das soeben beschriebene Verschlußsystem mit den wechselseitig den Längsschlitz überlappenden Längsflanschen 37. In Längsrichtung dazwischen ist der Verschlußstab 38 eingeführt und kann am Ende 39 für den Eingriff mit einem einfachen Werkzeug entsprechend ausgebildet sein.

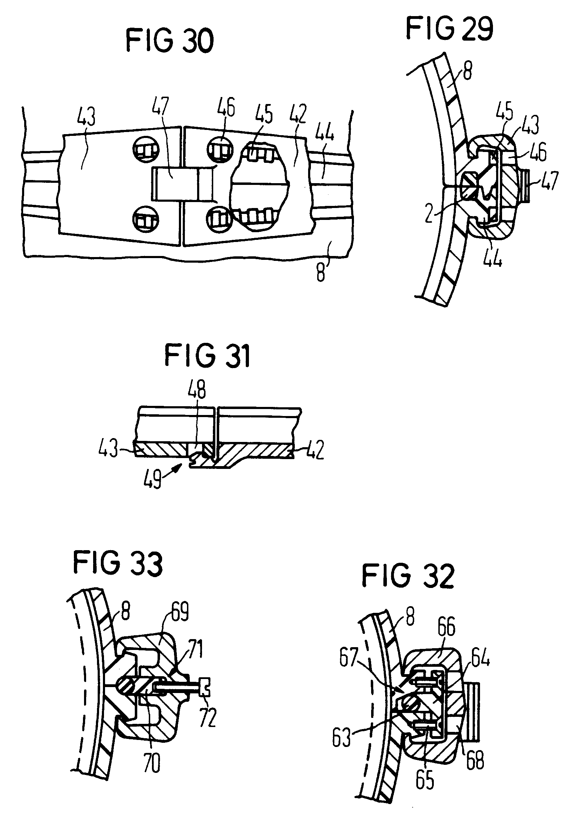

Die Figuren 29 bis 31 erläutern ein Verschlußsystem für eine erfindungsgemäße Kabelmuffe mit konisch zulaufenden Verbindungsschienen 42 und 43 und den ebenfalls konisch verlaufenden Verschlußflanschen 44 entlang des Längsschlitzes des Muffenrohres 8. Wie aus der Figur 30 hervorgeht sind zum Schließen des Muffenrohres 8 zum Beispiel zwei Schließschienen 42 und 43 vorgesehen, die auf die entsprechend konisch ausgeführten Längsflansche 44 des Muffenrohres 8 seitlich aufgeschoben werden. Diese Längsflansche haben im Bereich der Muffenrohrmitte reihenförmig angeordnete Ausnehmungen 45. Durch Öffnungen 46 der Verschlußschienen 42 und 43 können diese Verschlußschienen zum Beispiel mit einem Schraubendreher in Längsrichtung durch Hebelbewegung verschoben werden. Beim Schließvorgang des Muffenrohres erfolgt eine Verriegelung der beiden gegeneinander aufgezogenen Verschlußschienen 42 und 43 mit Hilfe eines Klinkenhebels 47, der auf der Verschlußschiene 42 angeordnet ist und in eine entsprechende Aussparung 48 der Verschlußschiene 43 einrastet, wie die Figur 31 verdeutlicht. Zum Entriegeln des Klinkenhebels 47 kann dieser mit einem Schraubendreher oder ähnlichem über die Nut 49 angehoben werden, anschliessend erfolgt die Lösung der keilförmigen Verschlußschienen 42 und 43 durch Abhebeln mit Hilfe eines Schraubendrehers über die oben erläuterten Vorrichtungen. Die Figur 29 erläutert im Querschnitt die Öffnungen 46 in der Verschlußschiene 43, durch die der Eingriff für einen Schraubendreher in die darunter liegenden Aussparungen 45 der Längsflansche 44 ermöglicht wird.

Die Figuren 32 bis 37 erläutern ein Verschlußsystem gemäß der Erfindung nach dem Prinzip der Figur 2, das heißt, die Runddichtungen 1 an den stirnseitigen Dichtungskörpern 7 sind von der Längsdichtung 2 entlang des Längsschlitzes des Muffenrohres 8 voneinander getrennt, so daß es im Bereich der beiden Dichtungskörper 7 zu Kreuzungen im Bereich W der Figur 2 der beiden Systeme kommt. Hierfür sind besondere Vorkehrungen zu treffen, um auch hier die erforderlichen Schließbedingungen einhalten zu können. Dabei können für die Runddichtungen 1 im großen und ganzen beliebige Systeme gemäß der Erfindung eingesetzt werden, wobei diese für sich geschlossen wie auch geteilt ausgebildet sein können.

Aus Figur 32 ist aus der Querschnittsdarstellung des Längsverschlusses eine Anordnung der Längsdichtung 63 ersichtlich, die mit Hilfe einer Druckleiste 64 und deren Befestigungsschrauben 65 nach dem Anbringen der Verschlußschienen 66 in eine von den Längsflanschen des Muffenrohres 8 gebildete Längsnut 67 eingepreßt wird. Durch die Anschrägung der Längsnut 67 in dem oberen Längsflansch des Muffenrohres 8 wird die Längsdichtung 63 auch gegen die ebene Fläche des unten liegenden Längsflansches gedrückt. Auf diese Weise erreicht man die gewünschte Pressung der Dichtung 63, die bei fest angeschraubter Druckleiste 64 erreicht wird. Diese Druckleiste 64 wird z.B. erst nach dem Anbringen der konischen Verschlußschienen 66 in die Längsdichtungsnut eingeschoben und durch Bohrungen 68 in den Verschlußschienen 66 mit den Befestigungsschrauben 65 angeschraubt. Die Gestaltung der Verschlußschienen 66 einschließlich der Verriegelung wurde bereits beschrieben.

In der Figur 33 ist eine abgewandelte Ausführung der soeben beschriebenen Längsdichtung dargestellt. Hierbei ist in jede der beiden konischen Schließschienen 69 eine Druckschiene 70 integriert, die in der Nut 71 geführt ist und mit den Druckschrauben 72 gegen die Längsdichtung 63 gedrückt wird. Dadurch erhält man gegenüber dem Ausführungsbeispiel von Figur 32 eine noch montagefreundlichere Variante, da alle erforderlichen Teile bereits zusammengefügt sind. Durch Eindrehen der Schrauben 72 nach erfolgtem Aufzug der Verschlußschienen 69 erfolgt die Pressung der eingelegten Längsdichtung 63 in der durch die Längsflansche gebildeten Dichtungsnut des Muffenrohres 8.

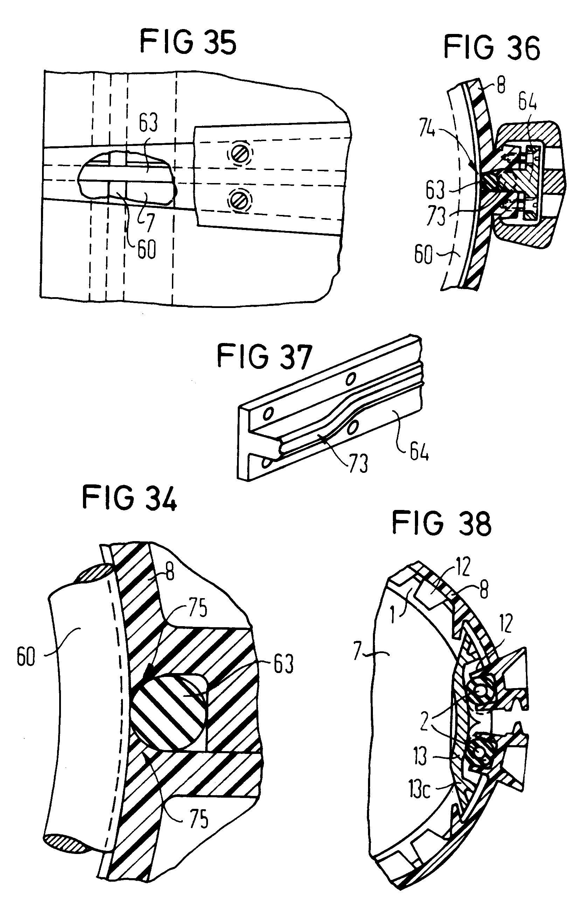

Die Figuren 34 bis 37 verdeutlichen nun einen Kreuzungspunkt der Runddichtung 60 auf dem Dichtungskörper 7 und der Längsdichtung 63, wie sie bei den beiden Ausführungsbeispielen nach Figur 32 und 33 gegeben sind. So ist, wie aus der Figur 36 zu entnehmen ist, der Nutgrund 74 des oberen Längsflansches in diesem Kreuzungsbereich geöffnet, so daß sich hier Runddichtung 60 und Längsdichtung 63 berühren können. Der in diesem Berührungsbereich entstehende sogenannte Zwickel wird unter Umständen auch mit einer örtlich angebrachten dauerplastischen, klebenden Masse ausgefüllt. Zur Abdichtung dieser Zwickel sind nun die inneren Dichtungslippen 75 der beiden Längsflansche des Muffenzylinders 8 schneidenförmig zulaufend ausgebildet, wie aus Figur 34 zu entnehmen ist. Die Längsdichtung 63 wird dabei im Bereich der Runddichtung 60 aus der inneren Kontur des Längsflansches durch die entsprechend gestaltete Feder 73 der Druckleiste 64 herausgeführt, womit eine Pressung der beiden Dichtungssysteme am Kreuzungspunkt entsteht. Die Figur 37 zeigt das Ende der Druckleiste 64 mit der hervorgezogenen Feder 73, durch die die Auslenkung der Längsdichtung 63 erfolgt. Diese Auslenkung geht auch aus Figur 36 hervor, in der durch Strichelung die Lage der Längsdichtung im übrigen Bereich des Längsschlitzes angedeutet ist. Auf diese Weise wird gewährleistet, daß auch im Kreuzungspunkt der beiden Dichtungselemente eine sichere Abdichtung der entstehenden Zwickelbereiche gewährleistet ist.

Die Figur 38 zeigt ein Ausführungsbeispiel gemäß der Erfindung nach dem Grundprinzip der Figur 3, das heißt, daß die Dichtungselemente 1-2 im Muffenrohr 8 integriert sind, wobei die Dichtungselemente 1-2 zum Beispiel endlos eingelegt sind. Die im Hintergrund sichtbare Runddichtung 1 ist dabei in einer durch Laschen 12 des Muffenrohres 8 gebildeten Rundnut fixiert und wird beim Verschließen des Muffenrohres 8 auf die Dichtungskörper 7 aufgepreßt. Die beiden Längsdichtungen 2 sind entlang der Längsränder des Muffenrohres 8 in zwei durch Ausformungen 12 gebildeten Nuten fixiert. Das Muffenrohr 8 wird nun nach erfolgter Montage der Dichtungskörper und der Verbindungsschiene 13 so aufgezogen, daß die beiden Längsdichtungen 2 der Verbindungsschiene 13 gegenüberliegen. Dabei besitzt die Verbindungsschiene 13 Ausformungen 13c, die sich hinter Ausformungen des Muffenrohres 8 entsprechend einspreizen, so daß sich die gegenseitige Zuordnung automatisch ergibt. Beim Schließvorgang des Muffenrohres 8 mit Hilfe einer Verschlußschiene werden die beiden Längsränder gegeneinander gezogen, wobei sich die Längsdichtungen 2 dichtend gegen die Verschlußschiene 13 anfügen. Wie in den Figuren 14 bis 16 bereits angedeutet wurde, ist auch hier die Verschlußschiene 13 mit entsprechenden Ausformungen versehen, um die sich bildenden Zwickelbereiche in den Dichtungsübergängen ebenfalls sicher abzudichten.

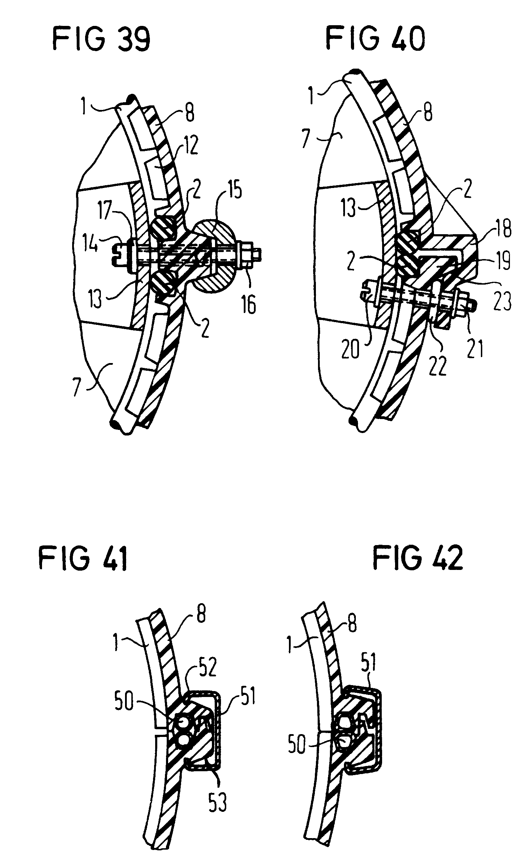

Die Figur 39 zeigt ein Ausführungsbeispiel gemäß der Erfindung im Bereich der Längsdichtungen 2, die durch das Muffenrohr 8 ebenfalls auf eine im Innern der Kabelmuffe befindliche Verbindungsschiene 13 aufgepreßt werden. Die Verbindungsschiene 13 ist mit seitlichen Flächen nach erfolgter Montage der Kabel in den Dichtungskörpern 7 fest verankert. Zur Vermeidung einer unterschiedlichen Längenausdehnung bei Temperaturänderung ist die Verbindungsschiene 13 beispielsweise ebenfalls in Kunststoff ausgeführt. Bei diesem Ausführungsbeispiel sind in die Verbindungsschiene 13 in kürzeren Abständen hintereinander Gewindebolzen 14 eingedreht, die durch entsprechende Frei-Halbbohrungen der beiden Längsflansche des Muffenrohres 8 nach außen durch eine Flanschschiene 15 hindurchgeführt sind. Die Flanschschiene 15 wird dann mit entsprechenden Muttern 16 gegen die Längsflansche des Muffenzylinders 8 gespannt, wobei die beiden Längsflansche des Muffenzylinders 8 aufeinander und die Verbindunsschiene 13 gegen die beiden Längsdichtungen 2 gepreßt werden. Ein Ausweichen der Verbindungsschiene 13 wegen zu geringer Formsteifigkeit ist somit nicht gegeben. Durch die beiderseitige Anschrägung der beiden Längsflansche des Muffenzylinders 8 wie auch der Flanschschiene 15 wird das Ansetzen der Flanschschiene 15 erleichtert und der beiderseitige Anpreßdruck der Längsflansche gegeneinander ermöglicht. Die Gewindebolzen 14 werden durch Elastomerscheiben 17 nach außen hin abgedichtet. Des weiteren ist im Hintergrund die Ringdichtung 1 angedeutet, die in der durch Segmente 12 gebildeten Ringnut des Muffenrohres 8 fixiert ist.

Die Figur 40 zeigt eine Alternativlösung zu dem in Figur 39 erläuterten Ausführungsbeispiel. Hier werden die beiden Längsdichtungen 2 zusätzlich zur Pressung auf die Verbindungsschiene 13 auch noch gegeneinander gepreßt, wodurch eine Steigerung der Dichtwirkung erreicht wird. Der oben gezeichnete Längsflansch 18 des Muffenrohres 8 ist hakenförmig ausgebildet und überlappt den zweiten abstehenden Längsflansch 19. Der untere Längsflansch 19 ist auf die in der Verbindungsschiene 13 eingeschraubten Gewindebolzen 20 gesteckt und von dem oberen Längsflansch 18 überdeckt, durch den ebenfalls die Bolzen 20 hindurchragen. Mit Hilfe von Sechskantmuttern 21 wird der geforderte Dichtungsdruck erzeugt, wobei die Abdichtung der Schraubbohrung wiederum durch eine zwischen den beiden Längsflanschen liegende Elastomerscheibe erfolgt. Eine Einführungsschräge 23 des innen liegenden Längsflansches 19 erleichtert die Überlappung der beiden Längsflansche und bewirkt außerdem das Aufeinanderpressen der beiden Längsdichtungen 2.

In den Figuren 41 und 42 ist ein Verschlußsystem für indirekt wirkende Dichtungseinlagen, wie sie zum Beispiel in den Figuren 7 und 8 angedeutet wurden, dargestellt. Das Verschlußsystem wird also mehr oder weniger lose zusammengefügt und der erforderliche Dichtungsdruck wird schließlich durch ein Druckmedium im Inneren des schlauchförmigen Dichtungssystems hervorgerufen. Die Figur 41 zeigt dabei die zunächst noch ohne Schließdruck beaufschlagte Längsdichtung des Muffenrohres 8, die in längsverlaufenden Dichtungsnuten eingelegte, schlauchförmige Dichtungselemente 50 aufweist. Die beiden längsverlaufenden Dichtungsflansche werden wiederum mit einer Verschlußschiene 51 zusammengehalten, wobei eine Nut- und Federkombination für die Ausrichtung der Längsflansche sorgt. Das Aufbringen und Einschnappen der Verschlußschiene 51 wird durch Abschrägungen 53 entlang der Längsflansche erleichtert, so daß die Verschlußschiene 51 durch Niederdrücken in außenliegende Längsnuten 52 eingeschnappt werden kann. Nach diesem einfachen Positionieren und Fixieren der Längsflansche wird die bisher drucklose Schlauchdichtung 50 durch ein Druckmedium, wie eingangs beschrieben, aufgeweitet, wobei durch den entstehenden Innendruck der erforderliche Schließdruck aufgebaut wird. Den Endzustand zeigt nun die Figur 42. Dabei ist erkennbar, daß die Schlauchdichtungen 50 den Nutraum völlig ausfüllen und dabei unter Umständen sogar die Verbindungsschiene 51 bis zum Anschlag an den Längsflanschen aufspreizen. Bei einem derartigen Verschlußsystem ist für die Abdichtung eine innen liegende Verbindungsschiene nicht nötig, so daß die Lage des Längsverschlusses unkritisch ist.

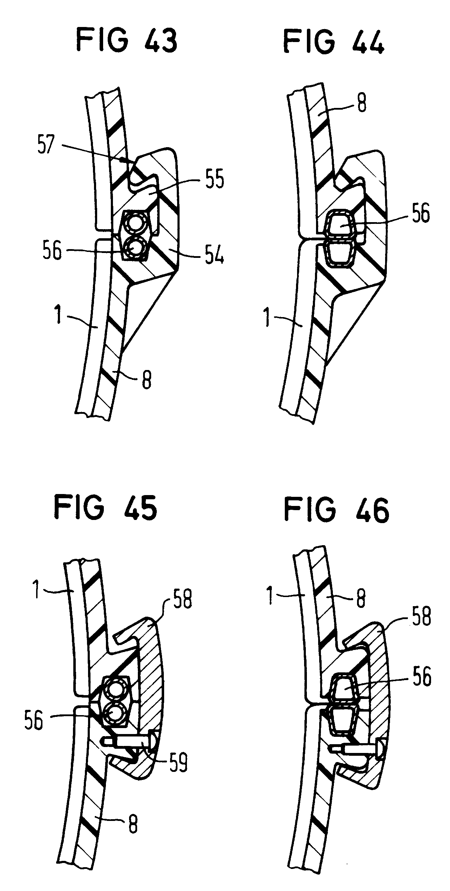

Die Figuren 43 und 44 zeigen in Längsschnitten den Längsdichtungsbereich einer Kabelmuffe gemäß der Erfindung nach dem Prinzip der beiden vorhergehenden Figuren, wobei hier keine zusätzlichen Verschlußteile benötigt werden. Bei diesem Ausführungsbeispiel ist der unten liegende Längsflansch 54 des Muffenrohres 8 hakenförmig ausgebildet und überlappt den oben liegenden Längsflansch 55. Der Längsflansch 54 wird nun bei eingelegter, noch druckloser Schlauchdichtung 56 über den Längsflansch 55 hinweggeschoben, wobei eine Anschrägung 57 das Zusammenfügen erleichtert. Die Figur 44 zeigt dann den Endzustand des Dichtungssystems, das heißt, das Schlauchsystem 56 ist im Inneren mit einem Druckmedium so weit beaufschlagt, bis der erforderliche Schließdruck eingestellt ist. Durch diese Verpressung erfolgt auch die erforderliche mechanische Verhakung des Verschlußsystems.

Die Figuren 45 und 46 zeigen wiederum ein Verschlußsystem mit indirekt wirkender Dichtung, wobei hier zur Vereinfachung des Spritzwerkzeuges für die Fertigung des Muffenrohres 8 die hakenförmige Ausbildung der Flansche nach den Figuren 43 und 44 durch eine U-förmige Schiene 58 ersetzt wird. Diese Schiene 58 wird am unteren Teil des Muffenrohres 8 mittels Befestigungselemente 59 wie Schrauben, Nieten oder ähnlichem befestigt. Die Figur 45 zeigt die drucklose, die Figur 46 die unter Druck stehende Dichtung.

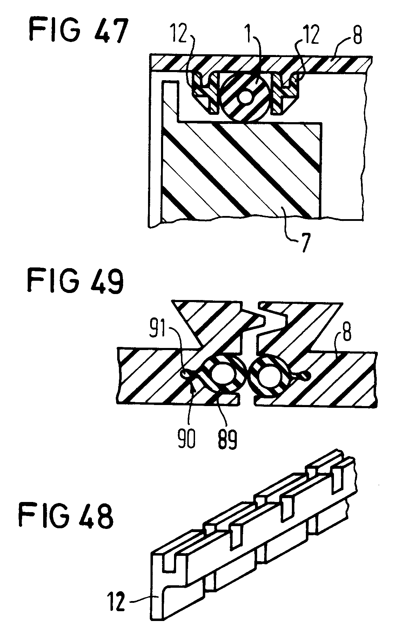

Die Figur 47 erläutert das Problem der umlaufenden Dichtungsnut im Muffenrohr 8 im Bereich der Dichtungskörper 7 für die Runddichtung 1. Einerseits soll diese Dichtungsnut dazu dienen, die Längsdichtung 1 zu fixieren, andererseits darf durch die Ausbildung einer solchen umlaufenden Nut die Flexibilität des Muffenrohres nicht beeinträchtigt werden. Die Fertigung eines Muffenrohres mit angeformten umlaufenden Nuten ist besonders schwierig, da die Ausformung des Muffenrohres aus der Spritzform sehr schwierig ist. So ist es zweckmäßig, separate Elemente zu schaffen, die nachträglich am Muffenrohr durch Kleben, Stecken oder Verklemmen aufgebracht werden können. Derartige Elemente 12 sind hier im Querschnitt dargestellt.

Die Figur 48 zeigt ergänzend zu Figur 47 die Ausbildung dieser Nutelemente 12, die in langgestreckter Form als Leiste aneinandergereiht sind und durch Quereinschnitte flexibel gehalten werden können. Diese leistenartigen Gebilde können dann in einfacher Weise auf Ausformungen des Muffenrohres 8 aufgesteckt werden wie aus der Figur 47 hervorgeht.

Figur 49 zeigt ein prinzipielles Ausführungsbeispiel zum Fixieren einer schlauchförmigen Dichtung 89 im Muffenrohr 8. Die Längsflansche des Muffenrohres 8 sind mit je einer Längsnut 90 versehen, in welche eine Stegleiste 91, die an den Dichtungselementen 89 seitlich angeformt ist, rastend eingedrückt und formschlüssig gehalten wird. Diese Art der Ausbildung eines schlauchförmigen Dichtungselementes läßt sich auf alle Ausführungsbeispiele übertragen, so daß sich eine weitere Erläuterung erübrigt. Vorzugsweise besteht ein derartiges schlauchförmiges Dichtungselement 89 aus einer speziellen Kautschukmischung entsprechend der erforderlichen Elastizität und zulässigen Permeation. Die endlosen Dichtungselemente sind vorzugsweise mit einem Gas gefüllt, das unter leichtem Überdruck steht. Die komprimierbare Gasfüllung eines solchen Dichtungselementes sorgt für einen allseits gleichmäßigen Anpreßdruck, so daß Fertigungstoleranzen bezüglich Querschnittsverengungen der Dichtungsnuten und dergleichen ausgeglichen werden können. Beim Schließen des Muffenrohres 8 mit konisch ausgeführten Verschlußschienen, wie sie mehrfach beschrieben sind, wird der für die Abdichtung von maximal 0,7 bar Innendruck erforderliche Gasdruck im schlauchförmigen Dichtungselement durch die Pressung gegeneinander und auf den Dichtungskörper erreicht.

### Bezugszeichenliste

- 1: Runddichtung
- 2: Längsdichtung
- 3: Ventil
- 4: Behälter
- 5: Kappe
- 6: Befestigungsschraube
- 7: Dichtungskörper
- 8: Muffenrohr
- 9: Dichtungsnut
- 10: Flanschleiste
- 11: Rundnut
- 12: Segment
- 13: Verbindungsschiene
- 14: Gewindebolzen
- 15: Flanschschiene
- 16: Gewindemutter
- 17: Elastomerscheibe
- 18: Längsflansch
- 19: Längsflansch
- 20: Gewindebolzen
- 21: Sechskantmutter
- 22: Elastomerscheibe
- 23: Einführungsschräge
- 24: Einzelschnalle
- 25: Stegblech
- 26: Befestigungsschraube
- 27: Schließschnalle
- 28: Schließschnalle
- 29: Einhängeschlitz
- 30: Spanndraht
- 31: Einhängeschlitz
- 32: Verschlußschiene
- 33: Kurvenscheibe
- 34: Drehachse
- 35: Einführungsschräge
- 36: Einführungsschräge
- 37: Längsflansch
- 38: Stab
- 39: Stabende
- 40: Rastnut
- 41: Einführungsschräge
- 42: Verbindungsschiene
- 43: Verbindungsschiene
- 44: Verschlußflansch
- 45: Ausnehmung
- 46: Öffnung
- 47: Klinkenhebel
- 48: Aussparung
- 49: Nut
- 50: Dichtungselement
- 51: Verschlußschiene
- 52: Längsnut
- 53: Abschrägung
- 54: Längsflansch
- 55: Längsflansch
- 56: Schlauchsystem
- 57: Anschrägung
- 58: Schiene
- 59: Befestigungselement
- 60: Runddichtung
- 61: /
- 62: /
- 63: Längsdichtung
- 64: Druckleiste
- 65: Befestigungsschraube
- 66: Verschlußschiene
- 67: Längsnut
- 68: Bohrung
- 69: Verschlußschiene
- 70: Druckschiene
- 71: Nut
- 72: Schraube
- 73: Feder
- 74: Nutgrund
- 75: Dichtungslippe
- 76 bis 83:: /
- 84: Ringdichtung
- 85: /
- 86: Ende
- 87: Quernut
- 88: Teilung
- 89: Dichtungselement
- 90: Längsnut
- 91: Stegleiste

## Patentansprüche

1. Kabelmuffe mit stirnseitigen Dichtungskörpern (7) und einem längsgeschlitzten Muffenrohr (8), wobei letzteres über Dichtungen auf die Dichtungskörper (7) aufgepreßt und mittels eines längsseitig entlang des Schlitzes verlaufenden Klemmverschlusses (15, 18, 24, 28, 32, 37, 43, 51, 54, 58) dichtend fixiert ist, wobei die Dichtungselemente (1, 2, 50, 56) aus elastischem Werkstoff bestehen, als stirnseitige Ringdichtungen (1) und als Längsdichtung (2, 50, 56) in ihrer Lage vor der Montage fixierbar und in ihrer Flexibilität so ausgestaltet sind, daß der Klemmverschluß (15, 18, 24, 28, 32, 37, 43, 51, 54, 58) bezüglich der Muffenrohrlängsränder und der darauf wirkenden Kraftschlußelemente unter Einhaltung des geforderten Schließdruckes möglichst einfach gestaltet ist, so daß er mit gebräuchlichen Werkzeugen verspannbar ist,
**dadurch gekennzeichnet,**
daß das Dichtungssystem aus einem Ring besteht, der die Länge der gesamten Dichtungsbereiche der stirnseitigen Dichtungskörper (7) und des Längsschlitzes des Muffenrohres (8) aufweist, wobei er sich endlos in Form von zwei offenen Ringen (1) über den Umfangsflächen der beiden stirnseitigen Dichtungskörper (7) und über zwei dazwischenliegenden hin- und zurückführenden Längsdichtungen (2) im Bereich des einen Längsschlitzes des Muffenrohres (8) erstreckt.

2. Kabelmuffe mit stirnseitigen Dichtungskörpern (7) und einem längsgeschlitzten Muffenrohr (8), wobei letzteres über Dichtungen auf die Dichtungskörper (7) aufgepreßt und mittels eines längsseitig entlang des Schlitzes verlaufenden Klemmverschlusses (66, 69) dichtend fixiert ist, wobei die Dichtungselemente (60, 63) aus elastischem Werkstoff bestehen, als stirnseitige Ringdichtungen (60) und als Längsdichtung (63) in ihrer Lage vor der Montage fixierbar und in ihrer Flexibilität so ausgestaltet sind, daß der Klemmverschluß (66, 69) bezüglich der Muffenrohrlängsränder und der darauf wirkenden Kraftschlußelemente unter Einhaltung des geforderten Schließdruckes möglichst einfach gestaltet ist, so daß er mit gebräuchlichen Werkzeugen verspannbar ist, wobei die Dichtungselemente (2, 60) am äußeren Umfang der Dichtungskörper (7) von der Längsdichtung (63) des Längsschlitzes des Muffenrohres (8) getrennt sind
**dadurch gekennzeichnet,**
daß auf die Dichtungselement (63) einwirkende Druckmittel (64, 70) vorgesehen sind, die separat von den Verschlußelementen (66, 69) nach Fixierung des Muffenrohres (8) (mittels Verschlußelementen) justierbar sind.

3. Kabelmuffe nach einem der vorhergehenden Ansprüche,
**dadurch gekennzeichnet,**
daß die Längsdichtung (2, 50, 56, 63) im Montagefall auf eine Zwischenschiene (13), vorzugsweise die modifizierte Verbindungsschiene der Dichtungskörper (7), gepreßt ist.

4. Kabelmuffe nach einem der vorhergehenden Ansprüche,
**dadurch gekennzeichnet,**
daß die Dichtungselemente (1, 2, 50, 56, 60, 63) aus Vollmaterial bestehen.

5. Kabelmuffe nach einem der Ansprüche 1 bis 3,
**dadurch gekennzeichnet,**
daß die Dichtungselemente (1, 2, 50, 56, 60, 63) als Schlauch ausgebildet sind.

6. Kabelmuffe nach einem der Ansprüche 1 bis 3,
**dadurch gekennzeichnet,**
daß die Dichtungselemente als Lippendichtung (1c, 2c) ausgebildet sind.

7. Kabelmuffe nach Anspruch 5,
**dadurch gekennzeichnet,**
daß das schlauchförmige Dichtungselement (1, 2) etwa rechteckförmigen Grundquerschnitt aufweist, wobei die beiden Seitenwände (1e, 2e) bogenförmig so einwärts gedellt sind, daß beim Zusammendrücken des Dichtungselementes (1, 2) eine bevorzugte Einknickrichtung erreichbar ist.

8. Kabelmuffe nach einem der Ansprüche 5 oder 7,
**dadurch gekennzeichnet,**
daß das schlauchförmige Dichtungselement (1, 2, 50, 56, 60, 63) in den Innenraum der Muffe gerichtete Öffnungen aufweist.

9. Kabelmuffe nach einem der vorhergehenden Ansprüche,
**dadurch gekennzeichnet,**
daß die Dichtungselemente (1, 2, 50, 56, 60, 63) Haftmittel aufweisen.

10. Kabelmuffe nach einem der Ansprüche 1 bis 8,
**dadurch gekennzeichnet,**
daß die Dichtungselemente (1, 2, 50, 56, 60, 63) durch Klemmung in nutförmigen Vorrichtungen fixierbar sind.

11. Kabelmuffe nach einem der Ansprüche 1 bis 8,
**dadurch gekennzeichnet,**
daß die Dichtungselemente (1, 2, 50, 56, 60, 63) Einknöpfmittel, vorzugsweise Verdickungen (86) an den Enden aufweisen.

12. Kabelmuffe nach einem der vorhergehenden Ansprüche,
**dadurch gekennzeichnet,**
daß die Dichtungselemente (1, 2, 50, 56, 60, 63) beim Zusammenpressen bis zum Schließdrucksollwert zunächst linear steigende und anschließend im Schließdruckbereich bis zum maximalen Schließdruck gleichbleibende Federcharakteristik aufweisen.

13. Kabelmuffe nach einem der Ansprüche 5 bis 12,
**dadurch gekennzeichnet,**
daß das Innere der schlauchförmigen Dichtungselemente (1, 2, 50, 56, 60, 63) mit Überdruck beaufschlagbar ist.

14. Kabelmuffe nach Anspruch 13,
**dadurch gekennzeichnet,**
daß ein Ventil (3) in das Dichtungselement (1, 2, 50, 56, 60, 63) eingesetzt ist.

15. Kabelmuffe nach Anspruch 13 oder 14,
**dadurch gekennzeichnet,**
daß ein komprimierbarer Behälter (4) an den schlauchförmigen Dichtungselementen (1, 2, 50, 56, 60, 63) angeschlossen ist.

16. Kabelmuffe nach einem der vorhergehenden Ansprüche,
**dadurch gekennzeichnet,**
daß die Dichtungselemente (1, 2, 50, 56, 60, 63) eine permeationsdichte Schicht aufweisen.

17. Kabelmuffe nach einem der vorhergehenden Ansprüche,
**dadurch gekennzeichnet,**
daß die Bereiche für die Dichtungselemente (1, 2, 50, 56, 60, 63) an den Dichtungskörpern (7) und den Längsdichtungen an den Umlenk- und Überschneidungspunkten entsprechende Füllprofile (13b) oder Ausformungen für die Zwickelbereiche zwischen den Dichtungselementen (1, 2, 50, 56, 60, 63) und den Oberflächen der Dichtungskörper (7) der Verbindungsschienen (13) und der Längsränder des Muffenrohres (8) aufweisen.

18. Kabelmuffe nach einem der vorhergehenden Ansprüche,
**dadurch gekennzeichnet,**
daß die Dichtungselemente (2, 63) der Längsdichtung in mindestens einer Nut des Verschlußflansches angeordnet sind.

19. Kabelmuffe nach einem der Ansprüche 1 bis 17,
**dadurch gekennzeichnet,**
daß die Dichtungselemente (1, 2, 50, 56, 60, 63) in Vertiefungen oder Fixierungen (12) auf der Innenwandung des Muffenrohres angeordnet sind.

20. Kabelmuffe nach einem der Ansprüche 1 bis 18,
**dadurch gekennzeichnet,**
daß die stirnseitigen Dichtungselemente (1, 60) auf den Dichtungskörpern (7) und die Längsdichtung (2) auf der Innenwandung des Muffenrohres (8) angeordnet sind.

21. Kabelmuffe nach einem der vorhergehenden Ansprüche,
**dadurch gekennzeichnet,**
daß der Klemmverschluß entlang des Längsschlitzes aus einzelnen Spannelementen (24, 28) gebildet ist.

22. Kabelmuffe nach Anspruch 21,
**dadurch gekennzeichnet,**
daß die einzelnen Spannelemente als Schnallen (24, 28) ausgebildet sind.

23. Kabelmuffe nach Anspruch 21,
**dadurch gekennzeichnet,**
daß die einzelnen Spannelemente als Vielzahl von den Längsschlitz wechselseitig übergreifenden, auswärts abstehenden Teilflanschen (37) besteht, wobei der gegenseitige Übergriff so gestaltet ist, daß in den abstehenden Teilflanschen (37) oberhalb des Längsschlitzes eine hinterschnittene Längsnut (40) entsteht und daß in dieser Längsnut (40) ein längsgerichtetes Verriegelungselement (38) einsetzbar ist.

24. Kabelmuffe nach Anspruch 23,
**dadurch gekennzeichnet,**
daß das Verriegelungselement (38) als ovaler Stab ausgebildet ist und in der gebildeten Längsnut (40) verdrehbar ist.

25. Kabelmuffe nach einem der Ansprüche 1 bis 20,
**dadurch gekennzeichnet,**
daß der Klemmverschluß aus einem geteilten, sich nach auswärts verjüngenden Flansch besteht, auf dem eine angepaßte Klauenschiene (15) aufgepreßt ist, wobei der Schließdruck durch auf die Innenschiene (13) wirkende Andruckmittel, vorzugsweise Schraubbolzen (14), hergestellt ist.

26. Kabelmuffe nach einem der vorhergehenden Ansprüche,
**dadurch gekennzeichnet,**
daß die beiden den Flansch bildenden Teilflansche Ausrichtelemente, vorzugsweise Nut und Feder, aufweisen.

27. Kabelmuffe nach einem der Ansprüche 1 bis 20,
**dadurch gekennzeichnet,**
daß ein Teilflansch (18) des Klemmverschlusses so ausgebildet ist, daß er den zweiten Teilflansch (19) übergreift und durch Schrägflächen (23) an beiden Teilflanschen mittels Andruckmittel (20) justiert und ausgerichtet ist.

28. Kabelmuffe nach einem der Ansprüche 1 bis 20,
**dadurch gekennzeichnet,**
daß die Teilflansche an den radial abstehenden Außenflächen Hinterschneidungen aufweisen, in welche abgewinkelte Verschlußschienen (32, 43, 51, 58, 66, 69) eingreifen.

29. Kabelmuffe nach Anspruch 28,
**dadurch gekennzeichnet,**
daß die Verschlußschienen (42, 43) und der Flansch des Muffenrohres (8) keilförmig ausgebildet sind.

30. Kabelmuffe nach Anspruch 28,
**dadurch gekennzeichnet,**
daß die Verschlußschienen (32) parallel verlaufende Eingriffsflächen aufweisen und daß Verspannelemente (33), vorzugsweise Exzenterschrauben in der Verschlußschiene (32) angeordnet sind, welche auf den Verschlußflansch des Muffenrohres (8) einwirken.

31. Kabelmuffe nach Anspruch 28,
**dadurch gekennzeichnet,**
daß die Teilflansche des Muffenrohres (8) radiale Einschnitte (45) für Hebelwerkzeuge aufweisen und daß die Verschlußschienen (42, 43) im Bereich der darunter liegenden Einschnitte (45) mehrere Ausschnitte (46) aufweisen.

32. Kabelmuffe nach einem der Ansprüche 28 bis 31,
**dadurch gekennzeichnet,**
daß die Verschlußschienen (42, 43, 66) Verhakungselemente (47, 49) zur Sicherung gegen Abgleiten aufweisen.

33. Kabelmuffe nach einem der vorhergehenden Ansprüche,
**dadurch gekennzeichnet,**
daß die Verschlußelemente (51, 54, 58) in Form von Einzelelementen oder von Schienen lose verhakbar sind und daß der erforderliche Schließdruck durch schlauchförmige, mit Innendruck beaufschlagbare Dichtungselemente (50, 56) einstellbar ist.

34. Kabelmuffe nach Anspruch 2,
**dadurch gekennzeichnet,**
daß die Druckmittel (64) im Bereich der Überschneidungen von Dichtungselementen (1-2, 60-63) entsprechende Ausformungen (73) aufweisen.

35. Kabelmuffe nach einem der vorhergehenden Ansprüche,
**dadurch gekennzeichnet,**
daß die Rundnut im Muffenrohr (8) für die Dichtungselemente (1) aus flexiblen Nutelementen (12) hergestellt ist.

36. Kabelmuffe nach einem der vorhergehenden Ansprüche,
**dadurch gekennzeichnet,**
daß die Dichtungselemente (89) mit seitlich angeformten Stegleisten (91) fixierbar sind.

## Claims

1. Cable sleeve having sealing bodies (7) at the ends and having a longitudinally slotted sleeve tube (8), the latter being pressed over seals onto the sealing bodies (7) and being fixed in a sealing manner by means of a clamping closure (15, 18, 24, 28, 32, 37, 43, 51, 54, 58) which runs on the longitudinal side along the slot, the sealing elements (1, 2, 50, 56) being composed of elastic material, being capable of being fixed in their position before assembly as end ring seals (1) and as a longitudinal seal (2, 50, 56) and being designed with respect to their flexibility such that the clamping closure (15, 18, 24, 28, 32, 37, 43, 51, 54, 58) is designed to be as simple as possible with respect to the sleeve tube longitudinal edges and the force-fitting elements acting thereon, while maintaining the required closing pressure, so that it can be braced using conventional tools, characterized in that the sealing system comprises a ring which has the length of the overall sealing regions of the end sealing bodies (7) and of the longitudinal slot in the sleeve tube (8), said ring extending endlessly in the form of two open rings (1) over the circumferential surfaces of the two end sealing bodies (7) and over two longitudinal seals (2), which are located between said sealing bodies (7) and pass backwards and forwards, in the region of the one longitudinal slot of the sleeve tube (8).

2. Cable sleeve having end sealing bodies (7) and having a longitudinally slotted sleeve tube (8), the latter being pressed over seals onto the sealing bodies (7) and being fixed in a sealing manner by means of a clamping closure (66, 69) which runs along the longitudinal side of the slot, the sealing elements being composed of elastic material, being capable of being fixed in their position before assembly and being designed with respect to their flexibility such that the clamping closure (66, 69) is designed to be as simple as possible with respect to the sleeve tube longitudinal edges and the force-fitting elements acting thereon, while maintaining the required closing pressure, so that it can be braced using conventional tools, the sealing elements (2, 60) being separated on the outer circumference of the sealing bodies (7) by the longitudinal seal (63) of the longitudinal slot of the sleeve tube (8), characterized in that pressure media (64, 70) are provided which act on the sealing elements (63) and can be adjusted separately from the closure elements (66, 69) after fixing of the sleeve tube (8) (by means of closure elements).

3. Cable sleeve according to one of the preceding claims, characterized in that the longitudinal seal (2, 50, 56, 63) is pressed, in the case of assembly, onto an intermediate rail (13), preferably the modified connecting rail of the sealing bodies (7).

4. Cable sleeve according to one of the preceding claims, characterized in that the sealing elements (1, 2, 50, 56, 60, 63) are composed of solid material.

5. Cable sleeve according to one of Claims 1 to 3, characterized in that the sealing elements (1, 2, 50, 56, 60, 63) are constructed as a hose.

6. Cable sleeve according to one of Claims 1 to 3, characterized in that the sealing elements are constructed as a lip seal (1c, 2c).

7. Cable sleeve according to Claim 5, characterized in that the sealing element (1, 2) which is in the form of a hose has an approximately rectangular base cross-section, the two side walls (1e, 2e) being dented inwards in a curved shape such that a preferred bending-in direction can be achieved when the sealing element (1, 2) is compressed.

8. Cable sleeve according to one of Claims 5 or 7, characterized in that the sealing element (1, 2, 50, 56, 60, 63), which is in the form of a hose, has openings directed into the internal space of the sleeve.

9. Cable sleeve according to one of the preceding claims, characterized in that the sealing elements (1, 2, 50, 56, 60, 63) have adhesion means.

10. Cable sleeve according to one of Claims 1 to 8, characterized in that the sealing elements (1, 2, 50, 56, 60, 63) can be fixed by clamping in devices in the form of grooves.

11. Cable sleeve according to one of Claims 1 to 8, characterized in that the sealing elements (1, 2, 50, 56, 60, 63) have buttoning-in means, preferably thickened regions (86), at the ends.

12. Cable sleeve according to one of the preceding claims, characterized in that, during compression to the required value of the closing pressure, the sealing elements (1, 2, 50, 56, 60, 63) have a spring characteristic which initially rises linearly and subsequently remains constant in the closing pressure region up to the maximum closing pressure.

13. Cable sleeve according to one of Claims 5 to 12, characterized in that the inner of the sealing elements (1, 2, 50, 56, 60, 63) which are in the form of hoses can have overpressure applied to it.

14. Cable sleeve according to Claim 13, characterized in that a valve (3) is inserted into the sealing element (1, 2, 50, 56, 60, 63).

15. Cable sleeve according to Claim 13 or 14, characterized in that a compressible container (4) is connected to the sealing elements (1, 2, 50, 56, 60, 63) which are in the form of hoses.

16. Cable sleeve according to one of the preceding claims, characterized in that the sealing elements (1, 2, 50, 56, 60, 63) have a permeation-proof layer.

17. Cable sleeve according to one of the preceding claims, characterized in that the regions for the sealing elements (1, 2, 50, 56, 60, 63) on the sealing bodies (7) and the longitudinal seals at the deflection and intersection points have suitable filling profiles (13b) or formed-out areas for the regions of the gaps between the sealing elements (1, 2, 50, 56, 60, 63) and the surfaces of the sealing bodies (7) of the connecting rails (13) and of the longitudinal edges of the sleeve tube (8).

18. Cable sleeve according to one of the preceding claims, characterized in that the sealing elements (2, 63) of the longitudinal seal are arranged in at least one groove in the closure flange.

19. Cable sleeve according to one of Claims 1 to 17, characterized in that the sealing elements (1, 2, 50, 56, 60, 63) are arranged in depressions or fixings (12) on the inner wall of the sleeve tube.

20. Cable sleeve according to one of Claims 1 to 18, characterized in that the end sealing elements (1, 60) are arranged on the sealing bodies (7), and the longitudinal seal (2) is arranged on the inner wall of the sleeve tube (8).

21. Cable sleeve according to one of the preceding claims, characterized in that the clamping closure along the longitudinal slot is formed from individual tensioning elements (24, 28).

22. Cable sleeve according to Claim 21, characterized in that the individual tensioning elements are constructed as catches (24, 28).

23. Cable sleeve according to Claim 21, characterized in that the individual tensioning elements comprise a multiplicity of flange parts (37) which engage over the longitudinal slot from alternate sides and project outwards, the mutual overlap being designed such that an undercut longitudinal groove (40) is produced in the projecting flange parts (37) above the longitudinal slot and such that a longitudinally directed locking element (38) can be inserted in this longitudinal groove (40).

24. Cable sleeve according to Claim 23, characterized in that the locking element (38) is constructed as an oval rod and can be twisted in the longitudinal groove (40) formed.

25. Cable sleeve according to one of Claims 1 to 20, characterized in that the clamping closure comprises a split flange which tapers outwards and on which a matched claw rail (15) is pressed, the closing pressure being produced by means of contact-pressure means, preferably screw bolts (14), which act on the inner rail (13).

26. Cable sleeve according to one of the preceding claims, characterized in that the two flange parts which form the flange have alignment elements, preferably a tongue and groove.

27. Cable sleeve according to one of Claims 1 to 20, characterized in that a flange part (18) of the clamping closure is constructed such that it engages over the second flange part (19) and is adjusted and aligned by means of contact-pressure means (20), by oblique surfaces (23) on both flange parts.

28. Cable sleeve according to one of Claims 1 to 20, characterized in that the flange parts have on the radially projecting outer surfaces undercuts in which bent closure rails (32, 43, 51, 58, 66, 69) engage.

29. Cable sleeve according to Claim 28, characterized in that the closure rails (42, 43) and the flange of the sleeve tube (8) are constructed in the form of wedges.

30. Cable sleeve according to Claim 28, characterized in that the closure rails (32) have engagement surfaces which run parallel and in that bracing elements (33), preferably eccentric screws, are arranged in the closure rail (32) and act on the closure flange of the sleeve tube (8).

31. Cable sleeve according to Claim 28, characterized in that the flange parts of the sleeve tube (8) have radial incisions (45) for lifting tools, and in that the closure rails (42, 43) have a plurality of cut-outs (46) in the region of the incisions (45) located underneath them.

32. Cable sleeve according to one of Claims 28 to 31, characterized in that the closure rails (42, 43, 66) have hooking elements (47, 49) for security against sliding off.

33. Cable sleeve according to one of the preceding claims, characterized in that the closure elements (51, 54, 58) can be hooked on in the form of individual elements or of rails, and in that the required closing pressure can be adjusted by means of sealing elements (50, 56) which are in the form of hoses and to which internal pressure can be applied.

34. Cable sleeve according to Claim 2, characterized in that the pressure media (64) have suitable formed-out areas (73) in the region of the intersections of sealing elements (1-2, 60-63).

35. Cable sleeve according to one of the preceding claims, characterized in that the annular groove in the sleeve tube (8) for the sealing elements (1) is produced from flexible groove elements (12).

36. Cable sleeve according to one of the preceding claims, characterized in that the sealing elements (89) can be fixed by means of laterally integrally formed web strips (91).

## Revendications

1. Manchon à câble comportant des corps d'étanchéité frontaux (7) et un tube (8) fendu longitudinalement, ce dernier étant emmanché à force, avec interposition de garnitures d'étanchéité, sur les corps d'étanchéité (7) et étant fixé d'une manière étanche au moyen d'un dispositif de fermeture à serrage (15, 18, 24, 28, 32, 37, 43, 51, 54, 58), qui s'étend longitudinalement le long de la fente, et dans lequel les éléments d'étanchéité (1,2,50,56) sont réalisés en un matériau élastique, peuvent être fixés en position avant le montage sous la forme de bagues d'étanchéité frontales (1) et en tant que garniture d'étanchéité longitudinale (2,50,56) et présentent une flexibilité telle que le dispositif de fermeture par serrage (15, 18, 24, 28, 32, 37, 43, 51, 54, 58) est agencé d'une manière aussi simple que possible par rapport aux bords longitudinaux du tube du manchon et des éléments de transmission de force, qui agissent sur ces bords, tout en respectant la pression de fermeture requise, de sorte qu'il peut être serré avec des outils usuels,
caractérisé par le fait
que le système d'étanchéité est constitué par un anneau qui possède la longueur de l'ensemble des zones d'étanchéité des corps d'étanchéité frontaux (7) et de la fente longitudinale du tube (8) du manchon, et s'étend sans fin sous la forme de deux anneaux ouverts (1), au-dessus des surfaces circonférentielles des deux corps d'étanchéité frontaux (7) et au-dessus des deux garnitures d'étanchéité longitudinales aller et retour, intercalées, dans la zone d'une fente longitudinale du tube (8) du manchon.

2. Manchon à câble comportant des corps d'étanchéité frontaux (7) et un tube (8) fendu longitudinalement, ce dernier étant emmanché à force, avec interposition de garnitures d'étanchéité, sur les corps d'étanchéité (7) et étant fixé d'une manière étanche au moyen d'un dispositif de fermeture par serrage (66,69), qui s'étend longitudinalement le long de la fente, et dans lequel les éléments d'étanchéité (60,63) qui sont réalisés en un matériau élastique, peuvent être fixés en position avant le montage sous la forme de bagues d'étanchéité frontales (60) et en tant que garniture d'étanchéité longitudinale (63) et présentent une flexibilité telle que le dispositif de fermeture par serrage (66,69) est agencé d'une manière aussi simple que possible par rapport aux bords longitudinaux du tube du manchon et des éléments de transmission de force, qui agissent sur ces bords, tout en respectant la pression de fermeture requise, de sorte qu'il peut être serré avec des outils usuels, les éléments d'étanchéité (2,60) étant séparés au niveau de la périphérie extérieure des corps d'étanchéité (7), par la garniture d'étanchéité longitudinale (63) de la fente longitudinale du tube (8) du manchon, caractérisé par le fait qu'il est prévu des moyens de pression (64,70) qui agissent sur les éléments d'étanchéité (63) et qui peuvent être ajustés séparément par rapport aux éléments de fermeture (66,69), après fixation du tube (8) du manchon (au moyen d'éléments de fermeture).

3. Manchon à câble suivant l'une des revendications précédentes, caractérisé par le fait que la garniture d'étanchéité longitudinale (2,50,56,63) est emmanchée à force, lors du montage, sur un rail intermédiaire (13), de préférence le rail de liaison modifié des corps d'étanchéité (7).

4. Manchon à câble suivant l'une des revendications précédentes, caractérisé par le fait que les éléments d'étanchéité (1,2,50,56,60,63) sont réalisés en un matériau massif.

5. manchon à câble suivant l'une des revendications 1 à 3, caractérisé par le fait que les éléments d'étanchéité (1,2,50,56,60,63) sont réalisés sous la forme d'un tuyau.

6. Manchon à câble suivant l'une des revendications 1 à 3, caractérisé par le fait que les éléments d'étanchéité sont réalisés sous la forme d'une garniture d'étanchéité en forme de lèvre (1c,2c).

7. Manchon à câble suivant la revendication 5, caractérisé par le fait que l'élément d'étanchéité en forme de tuyau (1,2) possède une section transversale de base approximativement rectangulaire, dont les deux parois latérales (1e,2e) sont déformées en forme d'arc de cercle vers l'intérieur, en sorte que, lors de la compression de l'élément d'étanchéité (1,2), on peut obtenir une direction préférentielle d'enfoncement par compression.

8. Manchon à câble suivant l'une des revendications 5 ou 7, caractérisé par le fait que l'élément d'étanchéité en forme de tuyau (1,2,50,56,60,63) possède des ouvertures dirigées vers l'espace intérieur du manchon.

9. Manchon à câble suivant l'une des revendications précédentes, caractérisé par le fait que les éléments d'étanchéité (1,2,50,56,60,63) comportent un adhésif.

10. Manchon à câble suivant l'une des revendications 1 à 8, caractérisé par le fait que les éléments d'étanchéité (1,2,50,56,60,63) peuvent être fixés par serrage dans des dispositifs en forme de rainure.

11. Manchon à câble suivant l'une des revendications 1 à 8, caractérisé par le fait que les éléments d'étanchéité (1,2,50,56,60,63) comportent des moyens en forme de boutons, de préférence des épaississements (86) sur leurs extrémités.

12. Manchon à câble suivant l'une des revendications précédentes, caractérisé par le fait que les éléments d'étanchéité (1,2,50,56,60,63) présentent, lors de la compression jusqu'à la valeur de consigne de la pression de fermeture, une caractéristique d'élasticité qui tout d'abord croît linéairement, puis reste constante dans la gamme des pressions de fermeture jusqu'à la pression maximale de fermeture.

13. Manchon à câble suivant l'une des revendications 5 à 12, caractérisé par le fait que l'intérieur des éléments d'étanchéité en forme de tuyau (1,2,50,56,60,63) peut être chargé par une surpression.

14. Manchon à câble suivant la revendication 13, caractérisé par le fait qu'une soupape (3) est insérée dans l'élément d'étanchéité (1,2,50,56,60,63).

15. Manchon à câble suivant la revendication 13 ou 14, caractérisé par le fait qu'un récipient (4) pouvant être comprimé est raccordé aux éléments d'étanchéité en forme de tuyau (1,2,50,56,60,63).

16. Manchon à câble suivant l'une des revendications précédentes, caractérisé par le fait que les éléments d'étanchéité (1,2,50,56,60,63) possèdent une couche imperméable.

17. Manchon à câble suivant l'une des revendications précédentes, caractérisé par le fait que les zones prévues pour les éléments d'étanchéité (1,2,50,56,60,63) sur les corps d'étanchéité (7) et sur les garnitures d'étanchéité longitudinales au niveau des points de renvoi et de croisement comportent des profils de remplissage (13b) ou des configurations correspondantes pour les interstices présents entre les éléments d'étanchéité (1,2,50,56,60,63) et les surfaces des corps d'étanchéité (7) des rails de liaison (13) et des bords longitudinaux du tube (8) du manchon.

18. Manchon à câble suivant l'une des revendications précédentes, caractérisé par le fait que les éléments d'étanchéité (2,63) de la garniture d'étanchéité longitudinale sont disposés au moins dans une rainure de la bride de fermeture.

19. Manchon à câble suivant l'une des revendications 1 à 17, caractérisé par le fait que les éléments d'étanchéité (1,2,50,56,60,63) sont disposés dans des renfoncements ou des dispositifs de fixation (12) sur la paroi intérieure du tube du manchon.

20. Manchon à câble suivant l'une de revendications 1 à 18, caractérisé par le fait que les éléments d'étanchéité frontaux (1,60) sont disposés sur les corps d'étanchéité (7) et que la garniture d'étanchéité longitudinale (2) est disposée sur la paroi intérieure du tube (8) du manchon.

21. Manchon à câble suivant l'une des revendications précédentes, caractérisé par le fait que le dispositif de fermeture à serrage est constitué, le long de la fente longitudinale, par des éléments individuels de serrage (24,28).

22. Manchon à câble suivant la revendication 21, caractérisé par le fait que les différents éléments de serrage sont réalisés sous la forme de boucles (24,28).

23. Manchon à câble suivant la revendication 21, caractérisé par le fait que les différents éléments de serrage sont constitués par une multiplicité de brides partielles (37), qui s'engagent alternativement au-dessus de la fente longitudinale et font saillie vers l'extérieur, le chevauchement réciproque étant agencé de telle sorte que dans les brides partielles saillantes (37), une rainure longitudinale en dépouille (40) est formée au-dessus de la fente longitudinale et qu'un élément de verrouillage longitudinal (38) peut être inséré dans cette rainure longitudinale (40).

24. Manchon à câble suivant la revendication 23, caractérisé par le fait que l'élément de verrouillage (38) est réalisé sous la forme d'un barreau ovale et peut tourner dans la rainure longitudinale formée (40).

25. Manchon à câble suivant l'une des revendications 1 à 20, caractérisé par le fait que le dispositif de fermeture à serrage est constitué par une bride divisée, qui se rétrécit en direction de l'extérieur et sur laquelle est emmanché un rail adapté à griffes (15), la pression de fermeture étant établie par des moyens de serrage qui agissent sur le rail intermédiaire (13), de préférence des boulons (14).

26. Manchon à câble suivant l'une des revendications précédentes caractérisé par le fait que les deux brides partielles formant la bride possèdent des éléments d'alignement, de préférence une rainure et une languette.

27. Manchon à câble suivant l'une des revendications 1 à 20, caractérisé par le fait qu'une bride partielle (18) du dispositif de fermeture à serrage est agencée de telle sorte qu'elle s'engage par-dessus la seconde bride partielle (19) et est ajustée et alignée au moyen de surfaces obliques (23) situées sur les deux brides partielles, à l'aide de moyens de serrage (20).

28. Manchon à câble suivant l'une des revendications 1 à 20, caractérisé par le fait que les brides partielles possèdent, sur des surfaces extérieures qui font saillie radialement, des parties découpées en dépouille, dans lesquelles s'engagent des rails de fermeture coudés (32,43,51,58,66,69).

29. Manchon à câble suivant la revendication 28, caractérisé par le fait que les rails de fermeture (42,43) et la bride du tube (8) du manchon sont agencés en forme de coin.

30. Manchon à câble suivant la revendication 28, caractérisé par le fait que les rails de fermeture (32) possèdent des surfaces d'attaque parallèles et que des éléments de serrage (33), de préférence des vis à excentrique, sont disposées dans le rail de fermeture (32) et agissent sur la bride de fermeture du tube (8) du manchon.

31. Manchon à câble suivant la revendication 28, caractérisé par le fait que les brides partielles du tube du manchon (8) possèdent des entailles radiales (45) pour des outils de levage et que les rails de fermeture (42,43) possèdent plusieurs découpes (46) dans la zone des entailles (45) situées au-dessous.

32. Manchon à câble suivant l'une des revendications 28 à 31, caractérisé par le fait que les rails de fermeture (42,43,66) comportent des éléments d'accrochage (47,49) pour assurer un blocage contre tout glissement.

33. Manchon à câble suivant l'une des revendications précédentes, caractérisé par le fait que les éléments de fermeture (51,54,58) peuvent être accrochés de façon lâche sous la forme d'éléments individuels ou de rails et que la pression de fermeture nécessaire peut être réglée par des éléments d'étanchéité en forme de tube (51,54,58), qui peuvent être chargés par une pression intérieure.

34. Manchon à câble suivant la revendication 2, caractérisé par le fait que les moyens de pression (64) possèdent des évidements correspondants (73) dans la zone de croisement d'éléments d'étanchéité (1-2, 60-63).

35. Manchon à câble suivant l'une des revendications précédentes, caractérisé par le fait que la rainure circulaire dans le tube (8) du manchon pour les éléments d'étanchéité (1) est réalisé sous la forme d'éléments de rainure flexibles (12).

36. Manchon à câble suivant l'une des revendications précédentes, caractérisé par le fait que les éléments d'étanchéité peuvent être fixés au moyen de réglettes (91) formées latéralement.
